(19) Europäisches Patentamt
European Patent Office
Office européen des brevets

(11) **EP 4 324 859 B1**

(12) **EUROPEAN PATENT SPECIFICATION**

(45) Date of publication and mention of the grant of the patent:
**17.06.2026 Bulletin 2026/25**

(21) Application number: **22788010.1**

(22) Date of filing: **28.03.2022**

(51) International Patent Classification (IPC):
***C08F 8/28*** *(2006.01)* ***B32B 17/10*** *(2006.01)*
***B32B 27/28*** *(2006.01)* ***C03C 27/12*** *(2006.01)*
***C08F 216/38*** *(2006.01)* ***C08L 29/14*** *(2006.01)*
***B32B 27/08*** *(2006.01)* ***C08F 216/06*** *(2006.01)*
***C08K 5/103*** *(2006.01)* ***C08K 5/11*** *(2006.01)*

(52) Cooperative Patent Classification (CPC):
(C-Sets available)
**C08L 29/14; B32B 17/1055; B32B 17/10605; B32B 17/10761; B32B 27/08; C08F 8/28; C08F 216/06; C08F 216/38; C08K 5/103; C08K 5/11;** B32B 17/10036; B32B 17/10688; B32B 17/10724; B32B 17/10743; B32B 17/10752;
(Cont.)

(86) International application number:
**PCT/JP2022/015056**

(87) International publication number:
**WO 2022/220085 (20.10.2022 Gazette 2022/42)**

(54) **PRODUCT OF ACETALIZATION OF ETHYLENE/VINYL ALCOHOL COPOLYMER AND COMPOSITION CONTAINING SAID ACETALIZATION PRODUCT**

ACETALISIERUNGSPRODUKT EINES ETHYLEN/VINYLALKOHOL-COPOLYMERS UND ZUSAMMENSETZUNG MIT DIESEM ACETALISIERUNGSPRODUKT

PRODUIT D’ACÉTALISATION DE COPOLYMÈRE ÉTHYLÈNE/ALCOOL VINYLIQUE ET COMPOSITION CONTENANT LEDIT PRODUIT D’ACÉTALISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2021 JP 2021067287**

(43) Date of publication of application:
**21.02.2024 Bulletin 2024/08**

(73) Proprietor: **Kuraray Co., Ltd.**
**Kurashiki-shi, Okayama 710-0801 (JP)**

(72) Inventors:
- **HIRAOKA, Nobutaka**
**Tsukuba-shi, Ibaraki 305-0841 (JP)**
- **TAKASUGI, Akio**
**Tsukuba-shi, Ibaraki 305-0841 (JP)**
- **NIIMURA, Takuro**
**Tsukuba-shi, Ibaraki 305-0841 (JP)**
- **NAKAHARA, Atsuhiro**
**Tsukuba-shi, Ibaraki 305-0841 (JP)**
- **SUGII, Hiroaki**
**Tsukuba-shi, Ibaraki 305-0841 (JP)**
- **ASANUMA, Yoshiaki**
**Kurashiki-shi, Okayama 713-8550 (JP)**

(74) Representative: **Müller-Boré & Partner Patentanwälte PartG mbB**
**Friedenheimer Brücke 21**
**80639 München (DE)**

(56) References cited:
**WO-A1-2018/180073 WO-A1-2020/196186**
**JP-A- 2010 168 444 JP-A- 2011 057 737**
**JP-A- 2017 115 076 JP-A- S6 474 201**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)
B32B 17/1077; B32B 17/10779; B32B 17/10807; B32B 17/10862; B32B 17/10871; B32B 17/10935; B32B 17/1099; B32B 2307/306; B32B 2307/412; B32B 2307/50; B32B 2307/51; B32B 2307/548; B32B 2307/558; B32B 2307/734; B32B 2307/7376; B32B 2333/12; B32B 2369/00; B32B 2419/00; B32B 2457/12; B32B 2605/08; C08L 2205/025

C-Sets
**C08F 8/28, C08F 216/06;**
**C08F 216/06, C08F 210/02, C08F 216/38;**
**C08F 216/38, C08F 210/02, C08F 216/06;**
**C08K 5/103, C08L 23/0861;**
**C08K 5/103, C08L 29/04;**
**C08K 5/103, C08L 29/14;**
**C08K 5/11, C08L 23/0861;**
**C08K 5/11, C08L 29/04;**
**C08K 5/11, C08L 29/14;**
**C08L 29/14, C08L 29/14;**
**C08L 29/14, C08L 71/02;**
C08F 216/06, C08F 210/02

## Description

### Technical Field

The present invention relates to an acetalization product of an ethylene/vinyl alcohol copolymer and a production method thereof, a composition containing the acetalization product, a resin sheet comprising the composition, a laminated glass interlayer comprising the resin sheet, and a laminated glass comprising the laminated glass interlayer.

### Background Art

Laminated glasses, even if subjected to external impact and broken, are safe because of less scattering of glass debris, and thus are widely used in front windshields, side windows or rear windows for vehicles such as automobiles, or windowpanes for aircraft or buildings.

Compositions where liquid plasticizers are compounded with vinyl acetal resins obtained by acetalization of polyvinyl alcohols, in particular, vinyl butyral resins are widely used for laminated glass interlayers. Vinyl acetal-based copolymers modified with $\alpha$-olefins, obtained by acetalization of $\alpha$-olefin-vinyl alcohol copolymers, are also studied to be used for laminated glass interlayers.

For example, Patent Literature 1 describes an interlayer composition for safe laminated glass, mainly comprising an $\alpha$-olefin-modified polyvinyl acetal resin described in the Literature, and having excellent penetration endurance in a broad temperature region ranging from a low temperature to a high temperature. Patent Literature 2 describes a vinyl acetal-based polymer enhanced in water resistance and improved in compatibility with a plasticizer, and a laminated glass interlayer, comprising the vinyl acetal-based polymer as a main component. Patent Literature 3 describes a sheet comprising a polyvinyl acetal resin, which is easy in adhesion with glass, high in light transmission, flexibility, and water vapor barrier properties, and low in water absorption rate. Patent Literature 4 discloses an acetalized ethylene vinyl alcohol copolymer containing 25 to 60 mol% ethylene and 24 to 71 mol% vinyl alcohol which is used as an interlayer film of a laminated glass.

### Citation List

#### Patent Literature

Patent Literature 1: JP S63 -79741 A
Patent Literature 2: JP 2004-68013 A
Patent Literature 3: JP 2011-57737 A
Patent Literature 4: WO 2020/196186 A1

### Summary of Invention

#### Technical Problem

In recent years, performances required for laminated glass have been enhanced, and laminated glass interlayers constituting laminated glass have also been demanded to retain excellent transparency, have excellent heat resistance and penetration resistance, regardless of the manufacturing conditions of laminated glass. In particular, such interlayers have been demanded to be able to, particularly in terms of heat resistance, have higher heat resistance, for example, have high self-supporting ability and have high creep resistance even under a high-temperature environment, keep high strength even after a lapse of long period.

However, it has been found by studies of the present inventors that a sheet comprising a vinyl acetal-based copolymer modified by $\alpha$-olefin, as described in Patent Literature 1 to 4, is not necessarily sufficient in self-supporting ability and creep resistance under a high-temperature environment, in some cases, and has room for improvement.

Accordingly, an object of the present invention is to provide an acetalization product of an ethylene/vinyl alcohol copolymer, which enables a resin sheet excellent in self-supporting ability and creep resistance under a high-temperature environment to be formed with transparency and penetration resistance being kept, and a composition containing the acetalization product.

Solution to Problem

The present inventors have made intensive studies in order to solve the above problems, and as a result, have reached the present invention.

Advantageous Effects of Invention

According to the present invention, an acetalization product of an ethylene/vinyl alcohol copolymer, which enables a resin sheet excellent in self-supporting ability and creep resistance under a high-temperature environment to be formed with transparency and penetration resistance being kept, and a composition containing the acetalization product can be provided.

Brief Description of Drawings

Fig. 1 illustrates one example of measurement results with high-performance liquid chromatography (HPLC), for describing a symmetry factor.
Fig. 2 illustrates measurement results with a differential scanning calorimeter (DSC) in Example 1.

Description of Embodiments

Hereinafter, embodiments of the present invention will be described in detail. When a plurality of upper limit values and a plurality of lower limit values are described with respect to a specified parameter or the like, any upper limit value and any lower limit value among these upper limit values and lower limit values can be combined to provide a suitable numerical range.

[Acetalization product of ethylene/vinyl alcohol copolymer]

The acetalization product of an ethylene/vinyl alcohol copolymer of the present invention (hereinafter, also simply referred to as "acetalization product") satisfies the following expressions (1) and (2):

$$0.75 \leq W_{0.05h}/2f \leq 1.00 \quad (1)$$

wherein $W_{0.05h}/2f$ represents a symmetry factor determined by reversed-phase partition gradient high-performance liquid chromatography analysis with a water-ethanol eluent, according to JIS K 0124:2011; and

$$1.27 \leq Tm/Tg \leq 1.35 \quad (2)$$

wherein Tm and Tg respectively represent a melting peak temperature (kelvin) and an intermediate glass transition temperature (kelvin) measured according to JIS K7121:2012.

Alternatively, the acetalization product of the present invention satisfies the following expression (1):

$$0.75 \leq W_{0.05h}/2f \leq 1.00 \quad (1)$$

wherein $W_{0.05h}/2f$ represents a symmetry factor determined by reversed-phase partition gradient high-performance liquid chromatography analysis with a water-ethanol eluent, according to JIS K 0124:2011, and
the meso/racemo ratio in an acetal ring structure is less than 5.

The present inventors have found that an acetalization product of an ethylene/vinyl alcohol copolymer, which satisfies both the expression (1) and the expression (2), namely, in which the symmetry factor $W_{0.05h}/2f$ is 0.75 to 1.00 and the Tm/Tg (K/K) is 1.27 to 1.35, can be prepared, or an acetalization product of an ethylene/vinyl alcohol copolymer, which satisfies the expression (1), namely, in which the symmetry factor $W_{0.05h}/2f$ is 0.75 to 1.00, and in which the meso/racemo ratio in an acetal ring structure is less than 5, can be prepared, to surprisingly allow a resin sheet comprising the acetalization product to be enhanced in self-supporting ability and creep resistance under a high-temperature environment with high transparency and penetration resistance being kept. The "self-supporting ability under a high-temperature environment" in the present invention means that, even when a resin sheet is used in a laminated glass as a laminated glass interlayer and the glass is broken under a high-temperature environment, the property that the glass broken hardly penetrates through the resin sheet (laminated glass interlayer) or the property that the resin sheet hardly sags is exhibited.

The acetalization product of the present invention has a symmetry factor $W_{0.05h}/2f$ of 0.75 to 1.00, determined according to JIS K 0124:2011, and thus a resin sheet obtained can be enhanced in transparency. The reason for this is considered because the symmetry factor is set within the above range to impart an appropriate distribution of the degree of acetalization to the acetalization product. In this regard, if the symmetry factor is not within the above range, the acetalization product obtained tends to be increased in variation in degree of acetalization and deteriorated in transparency. If the symmetry factor is more than the upper limit, the proportion of an acetalization product high in degree of acetalization (component high in degree of acetalization) in the acetalization product obtained is increased, easily resulting in deterioration in transparency. If the symmetry factor is less than the lower limit, the proportion of an acetalization product low in degree of acetalization (component low in degree of acetalization) in the acetalization product obtained is increased, easily resulting in deteriorations in transparency and moldability.

The symmetry factor is preferably 0.95 or less, more preferably 0.90 or less, further preferably 0.85 or less, from the viewpoint that transparency can be enhanced. The symmetry factor is preferably 0.76 or more, more preferably 0.77 or more from the viewpoint that transparency and moldability can be enhanced. The symmetry factor is here a coefficient representing the degree of symmetry of a measurement peak obtained with high-performance liquid chromatography, and it is indicated that, as the symmetry factor is closer to 1.0, the peak symmetry is higher.

In the present invention, the symmetry factor $W_{0.05h}/2f$ can be determined by reversed-phase partition gradient high-performance liquid chromatography analysis with a water-ethanol eluent, performed according to JIS K 0124:2011. In the symmetry factor, "$W_{0.05h}$" represents a peak width at a height of 1/20 the peak height from the baseline of a measurement peak obtained by HPLC analysis (position corresponding to 5% of the peak height), and "f" represents a distance at the rise of the peak in bisection of the peak width at a position corresponding to 5% of the peak height, with a perpendicular line containing the peak top. Specifically, a measurement peak in Fig. 1 is one example of measurement results of high-performance liquid chromatography (HPLC), and "$W_{0.05h}$" represents a peak width $W_{0.05h}$ illustrated in Fig. 1 and "f" represents a distance f between a-b illustrated in Fig. 1. In Fig. 1, a is an initiation point at a position corresponding to 5% of the peak height, and b is an intersection between a horizontal line containing a peak initiation point a and a perpendicular line containing the peak top. In Fig. 1, a dotted line in parallel with a lateral axis represents a baseline.

The HPLC analysis can be usually performed under the following measurement conditions.

Concentration of sample: 1.5 mg/1 g
Sample solvent: mixed solvent of ethanol (99.5%)/ion-exchange water = 9/1 wt%
Amount of injection: 20 μL
Detector: Varian 380-LC, EVAP 80°C (front-stage heating), NEB 50°C (second-stage heating), Gas 1.5 (SLM), interval of data capturing 1000 msec, filter 1 μm
ODS silica column: "Shimpack G-ODS manufactured by Shimadzu Corporation (spherical, totally porous silica gel modified by octadecyl group, 4 mm inner diameter × 10 mm length, grain size 5 μm)''
Column temperature: 45°C
Flow rate of liquid fed: total flow rate 0.4 mL/min

HPLC analysis in the present invention can be performed by the following procedure. Liquids different in polarity are used for mobile phases. Water is used as a mobile phase A and ethanol (99.5%) is used as a mobile phase B. The interior of the column in the HPLC system before sample injection is filled with a mixed solvent of mobile phase A/mobile phase B at a volume ratio of 95/5. The sample is injected in this state. The solvent is allowed to flow under the following conditions.

0 to 5 minutes (B concentration; _5%, constant)
5 to 25 minutes (B concentration; _5 to 100%)
25 to 30 minutes (B concentration; 100%, constant)
30 to 31 minutes (B concentration; 100 to 5%)
31 to 55 minutes (B concentration; _5%, constant)

The symmetry factor can be adjusted by appropriately adjusting, for example, a distribution of the degree of acetalization in the acetalization product and/or production conditions of the acetalization product. For example, the symmetry factor may be adjusted within the above range by selecting, for example, a method for producing the acetalization product of an ethylene/vinyl alcohol copolymer, described below, in particular, an acetalization method described as a preferred aspect in the description below.

The acetalization product of the present invention has a ratio Tm/Tg of the melting peak temperature (kelvin) to the intermediate glass transition temperature (kelvin), measured according to JIS K7121:2012, of 1.27 to 1.35, and/or has a meso/racemo ratio in an acetal ring structure, of less than 5, and thus self-supporting ability and creep resistance under a high-temperature environment can be enhanced with transparency of a resin sheet obtained being kept. The reason for this is considered because, although a higher crystallinity generally, while can allow for enhancements in self-supporting ability and creep resistance under a high-temperature environment, tends to lead to deterioration in transparency, the Tm/Tg of the acetalization product is within the above range or the meso/racemo ratio in an acetal ring structure is less than 5 to impart to the acetalization product, appropriate crystallinity capable of allowing both transparency, and self-supporting ability and creep resistance under a high-temperature environment. In this regard, if the Tm/Tg (K/K) is more than the upper limit, transparency can be deteriorated, and if the Tm/Tg (K/K) is less than the lower limit, self-supporting ability and creep resistance under a high-temperature environment can be deteriorated. If the meso/racemo ratio in an acetal ring structure is 5 or more, self-supporting ability and creep resistance under a high-temperature environment can be deteriorated.

The Tm/Tg (K/K) is 1.35 or less, preferably 1.33 or less, more preferably 1.31 or less, and further preferably 1.30 or less, from the viewpoint that transparency can be enhanced. The Tm/Tg (K/K) is 1.27 or more, preferably 1.275 or more, and more preferably 1.28 or more from the viewpoint that self-supporting ability and creep resistance under a high-temperature environment can be enhanced, and from the viewpoint that penetration resistance can be enhanced. The Tm/Tg (K/K) can be determined by measuring the melting peak temperature (kelvin) and the intermediate glass transition temperature (kelvin) with a differential scanning calorimeter (DSC), according to JIS K7121:2012, or may be determined by measuring the melting peak temperature Tm (°C) and the intermediate glass transition temperature Tg (°C) and converting each of these values to kelvin (K), or may be determined by, for example, a method described in Examples.

The melting peak temperature Tm (°C) of the acetalization product of the present invention, measured according to JIS K7121:2012, is preferably 120°C or more, more preferably 125°C or more, further preferably 130°C or more, and preferably 180°C or less, more preferably 175°C or less, further preferably 170°C or less, still more preferably 160°C or less, particularly preferably 150°C or less. When the melting peak temperature Tm is equal to or more than the lower limit, self-supporting ability and creep resistance under a high-temperature environment can be enhanced, and when the melting peak temperature Tm is equal to or less than the upper limit, transparency and moldability can be enhanced.

The intermediate glass transition temperature Tg (°C) of the acetalization product of the present invention, measured according to JIS K7121:2012, is preferably 20°C or more, more preferably 30°C or more, further preferably 40°C or more, and preferably 80°C or less, more preferably 60°C or less, and further preferably 50°C or less. When the intermediate glass transition temperature Tg is equal to or more than the lower limit, moldability (for example, film formability) can be enhanced, and when the intermediate glass transition temperature is equal to or less than the upper limit, penetration resistance of a resin sheet obtained can be enhanced.

The Tm/Tg (K/K) can be adjusted by appropriately adjusting, for example, a distribution of the degree of acetalization in the acetalization product and/or production conditions of the acetalization product. For example, the Tm/Tg (K/K) may be adjusted within the above range by selecting, for example, a method for producing the acetalization product of an ethylene/vinyl alcohol copolymer, described below, in particular, an acetalization method described as a preferred aspect in the description below.

**In** the present invention, the meso/racemo ratio in an acetal ring structure is the ratio of the amount of an acetal group having a meso acetal ring to the amount of an acetal group having a racemo acetal ring in a steric structure of an acetal ring. The racemo acetal ring is an acetal ring structure formed from a hydroxyl group having a syndiotactic structure, and the meso acetal ring is an acetal ring structure formed from a hydroxyl group having an isotactic structure.

The meso/racemo ratio is preferably less than 5, more preferably 4 or less, further preferably 3 or less, still more preferably 2.5 or less, and particularly preferably 2 or less, from the viewpoint that transparency, and self-supporting ability and creep resistance under a high-temperature environment can be enhanced, and the ratio is preferably 1.0 or more, more preferably 1.2 or more, and further preferably 1.4 or more from the viewpoint of productivity. When the meso/racemo ratio is less than the upper limit or equal to or less than the upper limit, a syndiotactic hydroxyl group is relatively decreased to impart to the acetalization product, appropriate crystallinity capable of allowing both transparency, and self-supporting ability and creep resistance under a high-temperature environment, to be satisfied, and thus self-supporting ability and creep resistance under a high-temperature environment can be enhanced with transparency being kept. Such a relative decrease in syndiotactic hydroxyl group results in a decrease in hydrogen bond between hydroxyl groups and an enhancement in compatibility of a plasticizer.

The meso/racemo ratio can be determined by performing 13C-NMR measurement and calculating, from the resulting spectrum, the intensity ratio between a peak derived from a methine C atom of an acetal moiety in a 6-membered butyral ring having a meso form and a peak derived from a methine C atom of an acetal moiety in a 6-membered butyral ring having a racemo form, and can be determined by, for example, a method described in Examples.

The meso/racemo ratio can be adjusted by appropriately adjusting the degree of acetalization of the acetalization product, production conditions of the acetalization product, for example, the reaction time and the reaction mode, and the like. For example, the meso/racemo ratio may be adjusted within the above range by selecting, for example, a method for producing the acetalization product of an ethylene/vinyl alcohol copolymer, described below, in particular, an acetalization method described as a preferred aspect in the description below.

The ethylene unit content in the acetalization product of the present invention is 20 to 80 mol% with respect to the total monomer unit constituting the acetalization product. When the ethylene unit content is within the above range, penetration resistance and self-supporting ability of a resin sheet obtained, in particular, self-supporting ability under a high-temperature environment, and molding processability of the acetalization product can be increased.

The ethylene unit content may be preferably 25 mol% or more, more preferably 30 mol% or more, and further preferably 35 mol% or more from the viewpoint that penetration resistance and transparency of a resin sheet obtained, and molding processability of the acetalization product can be enhanced, and the ethylene unit content may be preferably 60 mol% or less, more preferably 55 mol% or less, and further preferably 50 mol% or less, from the viewpoint that storage elastic modulus is increased and self-supporting ability of a resin sheet obtained can be enhanced.

The vinyl alcohol unit content in the acetalization product of the present invention is 4 to 76 mol% with respect to the total monomer unit constituting the acetalization product. When the vinyl alcohol unit content is within the above range, transparency and adhesiveness to a substrate such as glass, of a resin sheet obtained, can be increased.

The vinyl alcohol unit content, with respect to the total monomer unit constituting the acetalization product, may be preferably 10 mol% or more, more preferably 20 mol% or more, further preferably 25 mol% or more, and particularly preferably 30 mol% or more from the viewpoint that adhesiveness to a substrate such as glass can be increased, and the vinyl alcohol unit content may be preferably 70 mol% or less, more preferably 65 mol% or less, further preferably 60 mol% or less, and particularly preferably 55 mol% or less, from the viewpoint that transparency of the acetalization product obtained can be increased.

The content of an acetal unit (vinyl alcohol unit acetalized) in the acetalization product of the present invention, with respect to the total monomer unit constituting the acetalization product, may be preferably 1 mol% or more, more preferably 3 mol% or more, further preferably 5 mol% or more, still more preferably 10 mol% or more, and particularly preferably 15 mol% or more from the viewpoint that the acetalization product has a crystallinity kept low and can be increased in transparency, and may be preferably 70 mol% or less, more preferably 60 mol% or less, further preferably 55 mol% or less, still more preferably 50 mol% or less, and particularly preferably 45 mol% or less, from the viewpoint that self-supporting ability, in particular, self-supporting ability under a high-temperature environment and creep resistance under a high-temperature environment, and adhesiveness to a substrate such as glass can be increased.

The acetalization product of the present invention may contain a vinyl ester unit such as a vinyl acetate unit, and the vinyl ester unit content may be preferably 0 to 5 mol%, more preferably 0 to 2 mol%, further preferably 0 to 1 mol% from the viewpoint of resistance to thermal decomposition.

The acetalization product of the present invention may comprise other monomer unit, in addition to the ethylene unit, the vinyl alcohol unit and the acetal unit, and the vinyl ester unit optionally comprised, as long as the effects of the present invention are not impaired. Examples of such other monomer unit include $\alpha$-olefin such as propylene, isobutylene, $\alpha$-octene, or $\alpha$-dodecene; unsaturated acid such as acrylic acid, methacrylic acid, methyl methacrylate, crotonic acid, maleic acid, or itaconic acid, or an anhydride, salt or mono- or di-alkyl ester thereof; nitrile such as acrylonitrile or methacrylonitrile; amide such as acrylamide or methacrylamide; olefinsulfonic acid such as ethylenesulfonic acid, allyl sulfonic acid, or methallyl sulfonic acid, or a salt thereof; alkyl vinyl ethers, vinyl ketone, N-vinylpyrrolidone, vinyl chloride, or vinylidene chloride. **In** a case where the ethylene/vinyl alcohol copolymer comprises such other monomer unit, the content may be preferably 15 mol% or less, and more preferably 10 mol% or less.

The content of each unit in the acetalization product can be determined by NMR measurement, and can be determined by, for example, a method described in Examples.

The degree of acetalization of the acetalization product is 5 to 80 mol%. When the degree of acetalization is within the above range, transparency, self-supporting ability, self-supporting ability and creep resistance under a high-temperature environment of a resin sheet obtained, and adhesiveness to a substrate such as glass can be increased. The degree of acetalization may be preferably 5 mol% or more, more preferably 10 mol% or more, further preferably 15 mol% or more, still more preferably 20 mol% or more, and particularly preferably 25 mol% or more, from the viewpoint that the acetalization product has a crystallinity kept low and can be increased in transparency, and the degree of acetalization may be preferably 70 mol% or less, more preferably 62 mol% or less, further preferably 60 mol% or less, still more preferably 50 mol% or less, and particularly preferably 40 mol% or less, from the viewpoint that self-supporting ability and creep resistance under a high-temperature environment, and adhesiveness to a substrate such as glass can be increased.

The degree of acetalization in the present invention refers to the proportion of the acetal unit relative to the total content of the acetal unit, the vinyl alcohol unit, and the vinyl ester unit such as a vinyl acetate unit in the acetalization product. Specifically, the degree of acetalization in the present invention can be determined by the following expression:

$$\text{Degree of acetalization (mol\%)} = \{k/(k + l + m)\} \times 100$$

under the assumption the acetal unit content is k, the vinyl alcohol unit content is l and the vinyl ester unit content is m.

In one embodiment of the present invention, the SP value (solubility parameter) of the acetalization product is preferably 12.6 $(cal/cm^3)^{1/2}$ or less, more preferably 12.4 $(cal/cm^3)^{1/2}$ or less, further preferably 12.2 $(cal/cm^3)^{1/2}$ or less, still more preferably 12.0 $(cal/cm^3)^{1/2}$ or less, and preferably 10.8 $(cal/cm^3)^{1/2}$ or more, more preferably 11.0 $(cal/cm^3)^{1/2}$ or more,and further preferably 11.2 $(cal/cm^3)^{1/2}$ or more. When the SP value is equal to or less than the upper limit and/or equal to or more than the lower limit, bleedout of a plasticizer can be suppressed in preparation of a composition by addition of the plasticizer to the acetalization product of the present invention. The SP value is a value calculated according to the Fedors calculation method (R.F.Fedors, Polym. Eng. Sci., 14, 147 (1947)).

In one suitable embodiment of the present invention, a resin sheet obtained from the acetalization product of the present invention exhibits the same values of the haze, the haze in slow cooling, the storage elastic modulus, the relaxation modulus, and the penetration energy, of the resin sheet of the present invention, described in the section [Resin sheet] described below. Accordingly, the acetalization product of the present invention can allow for formation of a resin sheet that has excellent transparency and penetration resistance and that is excellent in self-supporting ability and creep resistance under a high-temperature environment.

In one suitable embodiment of the present invention, the acetalization product of the present invention exhibits the same values of the melting peak temperature Tms, the melt flow rate (MFR), and the $\Delta H_{AH}/\Delta H_A$ of a composition described in the section [Composition].

[Method for producing acetalization product of ethylene/vinyl alcohol copolymer]

The method for producing the acetalization product of the present invention is not particularly, and the acetalization product of the present invention can be produced by a method, for example, comprising:

(i) a step of preparing a dispersion comprising an ethylene/vinyl alcohol copolymer, an aldehyde and a solvent, and impregnating the ethylene/vinyl alcohol copolymer with at least one portion of the aldehyde, and
(ii) a step of adding a catalyst to the dispersion and acetalizing the ethylene/vinyl alcohol copolymer, after step (i), wherein

the ethylene/vinyl alcohol copolymer is a porous object, and
the acetalization is performed by solid-liquid reaction.

<Step (i)>

Step (i) is a step of preparing a dispersion (hereinafter, also referred to as "EVOH dispersion") comprising an ethylene/vinyl alcohol copolymer (hereinafter, also referred to as "EVOH"), an aldehyde and a solvent, and impregnating the ethylene/vinyl alcohol copolymer with at least one portion of the aldehyde.

In the method of the present invention, EVOH comprised in the EVOH dispersion is a porous object. A porous object of the ethylene/vinyl alcohol copolymer (hereinafter, also referred to as "EVOH porous object" or also simply referred to as "porous object") can be used as a raw material, to easily homogeneously acetalize EVOH and easily adjust the symmetry factor of the acetalization product obtained, within the above range, and thus an acetalization product that hardly causes intermolecular crosslinking of EVOH and that is excellent in transparency even by acetalization of solid EVOH by a heterogeneous method can be obtained. The reason for this is considered because, when the EVOH porous object is used to impregnate EVOH with at least one aldehyde described below, aldehyde as an acetalization agent can permeate not only into a solid surface of EVOH, but also into a solid interior of EVOH through a pore, to allow for homogeneous acetalization of EVOH, and as a result, the difference in degree of acetalization between the solid surface and the solid interior of an acetalization product obtained by acetalization is smaller and an acetalization product narrow in distribution of the degree of acetalization is obtained.

In the present invention, the EVOH porous object is preferably EVOH containing a large number of pores, and some of or all the pores preferably each have an opening in a porous object surface.

In one embodiment of the present invention, the pore median diameter of the EVOH porous object is preferably 0.005 μm or more, more preferably 0.01 μm or more, and further preferably 0.02 μm or more, from the viewpoint that EVOH is homogeneously acetalized and thus an acetalization product obtained of EVOH can be enhanced in transparency. The median diameter is preferably 1 μm or less, more preferably 0.5 μm or less, further preferably 0.2 μm or less, still more preferably less than 0.2 μm, especially preferably 0.18 μm or less, especially more preferably 0.15 μm or less, and particularly preferably 0.12 μm or less, from the viewpoint that the porous object can retain strength and thus the porous object is hardly disintegrated and crushed in a production step of the acetalization product of EVOH, and as a result, blocking or the like of a production line is hardly caused and the acetalization product can be produced at a good efficiency. The pore median diameter is a median diameter (d50) of all pores having a pore diameter in a range of 0.005 to 100 μm in a Log derivative pore volume (logarithmic derivative pore volume) distribution. The reason why the pore diameter is set in a range of 0.005 to 100 μm in the pore distribution is because a pore distribution with a pore diameter of more than 100 μm is mainly due to an interparticle void and a pore distribution with a pore diameter of less than 0.005 μm around the lower limit of measurement is associated with a pseudo pore due to compression or the like.

The pore median diameter of the porous object can be adjusted by production conditions of the porous object. For example, in a case where a composition comprising EVOH and at least one solvent selected from water and alcohol is prepared, and extruded into a congelation liquid and then coagulated in a strand shape, and a strand-shaped coagulate obtained is cut to produce the EVOH porous object, the median diameter of the porous object can be adjusted by, for example, the type and the content of the solvent comprised in the composition, the line velocity and the extrusion temperature in extrusion of the composition, and the cooling rate.

Such a pore median diameter can be measured with a pore distribution measurement apparatus, and is measured by, for example, a method described in Examples.

In one embodiment of the present invention, the EVOH porous object preferably contains a pore in a gravity center section of the porous object. The porous object contains a pore in the gravity center section, to enable the aldehyde to permeate to the solid interior of EVOH, in particular, a gravity center section of EVOH, and thus enable EVOH to be homogeneously acetalized, and as a result, intermolecular crosslinking of EVOH is hardly caused and an acetalization product obtained of EVOH can be enhanced in transparency.

In the present invention, the "containing a pore in a gravity center section of the porous object" means that, when the shortest distance in a distance from the gravity center of a porous object cross section passing through the gravity center of the porous object, to a porous object surface, is defined as the distance L, a pore is present in a region corresponding to 50% or less of the distance L from the gravity center of the cross section.

In one embodiment of the present invention, the EVOH porous object contains, in a porous object cross section passing through the gravity center of the porous object, a pore in preferably a region corresponding to 30% or less, more preferably a region corresponding to 20% or less, and further preferably a region corresponding to 10% or less of a distance L from the gravity center of the cross section, under the assumption that the distance L is the shortest distance in a distance from the gravity center of the cross section to a porous object surface, from the viewpoint that EVOH is homogeneously acetalized and thus an acetalization product obtained of EVOH can be enhanced in transparency.

**In** one embodiment of the present invention, the total pore area in a porous object cross section passing through the gravity center of the EVOH porous object is preferably 10 area% or more, more preferably 20 area% or more, and further preferably 30 area% or more with respect to the total of the cross section area, from the viewpoint that EVOH is homogeneously acetalized and thus an acetalization product obtained of EVOH can be enhanced in transparency. The total pore area may be preferably 60 area% or less, and more preferably 50 area% or less with respect to the total of the cross section area, from the viewpoint that strength of the porous object can be enhanced and as a result, the porous object is hardly disintegrated and an acetalization product can be produced at a good efficiency in an acetalization product production step.

The porous object cross section passing through the gravity center of the EVOH porous object can be made with a single-edged razor blade or the like. The presence or absence of a pore and the proportion of the total pore area in the cross section can be confirmed and calculated by observation and analysis of an electron photomicrograph of the cross section.

**In** one embodiment of the present invention, the pore surface area (specific surface area) at 0.005 to 100 μm, of the EVOH porous object, as measured by a mercury intrusion technique, is preferably 25 $m^2/g$ or more, more preferably 30$m^2/g$ or more from the viewpoint that an acetalization product of EVOH can be enhanced in transparency. The pore surface area of the EVOH porous object is preferably 45$m^2/g$ or less, more preferably 41$m^2/g$ or less, further preferably 39$m^2/g$ or less, from the viewpoint that porous EVOH can be inhibited from agglutinating during washing at a high temperature in a production process of the EVOH porous object.

The pore surface area at 0.005 to 100 μm, of the EVOH porous object, can be adjusted by production conditions of the porous object. For example, this can be adjusted by, for example, the type and the content of the solvent comprised in the composition, the line velocity and the extrusion temperature in extrusion of the composition to a congelation liquid, and the cooling rate, as in the method for adjusting the pore median diameter of the porous object. The pore surface area of the EVOH porous object can be measured with a pore distribution measurement apparatus.

In one embodiment of the present invention, the pore volume of the EVOH porous object may be preferably 0.1 mL/g or more, more preferably 0.2 mL/g or more, and further preferably 0.25 mL/g or more, from the viewpoint that EVOH is homogeneously acetalized and thus an acetalization product obtained of EVOH can be enhanced in transparency. The pore volume may be preferably 1.0 mL/g or less, more preferably 0.5 mL/g or less, and further preferably 0.3 mL/g or less, from the viewpoint of easy handling.

The pore volume of the EVOH porous object can be adjusted by production conditions of the porous object. For example, this can be adjusted by, for example, the type and the content of the solvent comprised in the composition, the line velocity and the extrusion temperature in extrusion of the composition to a congelation liquid, and the cooling rate in coagulation, as in the method for adjusting the pore median diameter of the porous object. The pore volume of the porous object can be measured with a pore distribution measurement apparatus.

In one embodiment of the present invention, the average particle diameter of the EVOH porous object may be preferably 1 mm or more, more preferably 2 mm or more, further preferably 3 mm or more from the viewpoint of handleability. The average particle diameter may be preferably 10 mm or less, more preferably 7 mm or less, further preferably 5 mm or less, from the viewpoint that EVOH can be homogeneously acetalized and an acetalization product obtained can be enhanced in transparency. The average particle diameter can be measured by, for example, a method described in Examples.

The shape of the EVOH porous object is not particularly limited, and examples thereof include a powder shape, a pellet shape, a flake shape, a bead shape, and an indefinite shape. In particular, the porous object is preferably powder-shaped or pellet-shaped, more preferably pellet-shaped. The pellet-shaped porous object in the present invention means a solid-state porous object having a substantially constant size, for example, having a spherical shape, a cylindrical shape, an elliptic cylinder shape, or a polygonal shape, and the cross section thereof may have a circular shape, an elliptic shape, a polygonal shape, or the like.

In a case where the EVOH porous object of the present invention is pellet-shaped, such a pellet-shaped porous object can be produced by, for example, a method comprising extruding an ethylene/vinyl alcohol copolymer composition into a congelation liquid to coagulate it in a strand shape, and then cutting a strand-shaped coagulate obtained, to a predetermined length by a strand cutter or the like, or a method comprising directly cutting an ethylene/vinyl alcohol copolymer composition in a molten state, as described below.

Examples of the ethylene/vinyl alcohol copolymer include one obtained by copolymerizing ethylene and a vinyl ester-based monomer and saponifying a copolymer obtained. In one embodiment of the present invention, the ethylene content (hereinafter, also referred to as ethylene unit content) in the ethylene/vinyl alcohol copolymer is preferably 20 to 80 mol% with respect to the total monomer unit constituting EVOH. The ethylene content may be more preferably 25 mol% or more, further preferably 30 mol% or more, particularly preferably 35 mol% or more from the viewpoint that an acetalization product obtained can be enhanced in penetration resistance and molding processability, and may be more preferably 60 mol% or less, further preferably 55 mol% or less, particularly preferably 50 mol% or less, from the viewpoint that an acetalization product obtained can be enhanced in self-supporting ability.

The degree of saponification of EVOH is not particularly limited, and is, for example, preferably 95 mol% or more, more preferably 98 mol% or more, further preferably 99 mol% or more, and particularly preferably 99.9 mol% or more from the viewpoint of resistance to thermal decomposition. The upper limit of the degree of saponification is not particularly limited, and may be, for example, 100 mol% or less.

The vinyl alcohol unit content in the ethylene/vinyl alcohol copolymer, with respect to the total monomer unit constituting EVOH, may be preferably 40 mol% or more, more preferably 45 mol% or more, and further preferably 50 mol% or more from the viewpoint that an acetalization product obtained can be enhanced in self-supporting ability, and may be preferably 80 mol% or less, more preferably 75 mol% or less, further preferably 70 mol% or less, and particularly preferably 65 mol% or less, from the viewpoint that an acetalization product obtained can be enhanced in penetration resistance and molding processability.

In the present invention, the ethylene/vinyl alcohol copolymer may comprise, in addition to an ethylene unit, a vinyl alcohol unit and a vinyl ester unit, a monomer unit (hereinafter, also referred to as "other monomer unit") derived from a monomer copolymerizable with such unit(s), as long as the effects of the present invention are not impaired. Examples of such other monomer unit include the same monomer units as those with respect to other monomer unit that may be comprised in the acetalization product. In a case where the ethylene/vinyl alcohol copolymer comprises such other monomer unit, the content may be preferably 15 mol% or less, and more preferably 10 mol% or less.

The contents of the ethylene unit, the vinyl alcohol unit and such other monomer unit optionally comprised in EVOH in the present invention can be determined by NMR measurement, and can be determined by, for example, a method described in Examples.

The ethylene/vinyl alcohol copolymer is not particularly limited in terms of the copolymerization form, and may be any of a random copolymer, an alternating copolymer, a block copolymer, a graft copolymer, and the like.

In one embodiment of the present invention, the melt flow rate (MFR) of the ethylene/vinyl alcohol copolymer, measured under conditions of 190°C and 2.16 Kg according to JIS K7210-1:2014, may be preferably 1 to 30 g/10 min, more preferably 2 to 20 g/10 min, further preferably 3 to 10 g/10 min from the viewpoint that an acetalization product obtained can be inhibited from being degraded due to heat in molding processing.

The method for producing the ethylene/vinyl alcohol copolymer serving as a porous object is not particularly limited, and the copolymer can be produced by a known method. A method for producing a pellet-shaped EVOH porous object as one example will be described.

Such a pellet-shaped EVOH porous object can be produced by a method comprising a step of preparing a composition comprising an ethylene/vinyl alcohol copolymer and at least one solvent selected from water and alcohol, and a step of extruding the composition into a congelation liquid and coagulating it in a strand shape, and cutting such a coagulate, or a step of directly cutting the composition in a molten state, as described in, for example, JP H11-293077 A and JP 2002-121290 A.

EVOH included in the composition can be obtained by copolymerizing ethylene and a vinyl ester-based monomer, and saponifying a copolymer obtained.

Examples of the vinyl ester-based monomer as a raw material of EVOH include vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, or vinyl benzoate. In particular, vinyl acetate is preferable.

The method for copolymerizing ethylene and the vinyl ester-based monomer is not particularly limited, and the copolymerization may be made by a conventionally known method such as a solution polymerization method, a mass polymerization method, a suspension polymerization method, or an emulsion polymerization method. The polymerization initiator usable in the copolymerization can be appropriately selected from conventionally known polymerization initiators such as azo-based initiators, peroxide-based initiators, and redox-based initiators, depending on the polymerization method.

Such saponification of the copolymer of ethylene and the vinyl ester-based monomer can be performed by alcoholysis, hydrolysis or the like with a conventionally known alkali catalyst or acid catalyst, and in particular, saponification with a caustic soda (NaOH) catalyst in methanol as a solvent is preferable because of being simple.

The alcohol that can be comprised in the composition is not particularly limited as long as it is a solvent that can dissolve EVOH, and examples include methanol, ethanol, propanol, or isopropanol. Among these alcohols, an alcohol having a boiling point of 100°C or less is preferable because of having a low boiling point and being easily removed, and, in particular, methanol is preferable.

In a case where the composition comprises water as the solvent, the composition may be prepared by directly adding water to EVOH, or a composition comprising EVOH and alcohol, or may be prepared by, if necessary, concentrating an alcohol solution of EVOH, in which EVOH is dissolved in alcohol, and then adding water at a level not resulting in precipitation of EVOH in the alcohol solution of EVOH. A composition comprising EVOH and water, or EVOH, water and alcohol may also be obtained by introducing water vapor into a composition comprising EVOH or EVOH and alcohol, and discharging at least one portion of such alcohol, together with water vapor.

The alcohol usable in the alcohol solution of EVOH is not particularly limited as long as it is a solvent that can dissolve EVOH, examples thereof include the same as in the alcohol that can comprised in the composition, an alcohol having a boiling point of 100°C or less is preferable because of having a low boiling point and being easily removed, and, in particular, methanol is preferable.

The content of the alcohol in the alcohol solution of EVOH may be preferably 1 to 500 parts by mass, more preferably 5 to 200 parts by mass with respect to 100 parts by mass of EVOH.

In a case where the composition comprises water, the content of the water with respect to 100 parts by mass of EVOH is preferably 10 parts by mass or more, more preferably 30 parts by mass or more, further preferably 50 parts by mass or more from the viewpoint that EVOH can be homogeneously acetalized and from the viewpoint that a neutralized salt generated due to neutralization after acetalization reaction can be removed, and is preferably 500 parts by mass or less, more preferably 300 parts by mass or less, further preferably 200 parts by mass or less, from the viewpoint that a porous object obtained can be increased in strength and as a result, an acetalization product can be produced at a good efficiency.

In a case where the composition comprises alcohol, the content of the alcohol with respect to 100 parts by mass of EVOH is preferably 10 parts by mass or more, more preferably 30 parts by mass or more, further preferably 50 parts by mass or more from the viewpoint that EVOH can be homogeneously acetalized and from the viewpoint that a neutralized salt generated due to neutralization after acetalization reaction can be removed, and is preferably 500 parts by mass or less, more preferably 300 parts by mass or less, further preferably 200 parts by mass or less, from the viewpoint that a porous object obtained can be increased in strength and as a result, an acetalization product can be produced at a good efficiency.

The congelation liquid that coagulates the composition is not particularly limited as long as it is a solvent that can coagulate EVOH, and water, alcohol, or a mixed solvent of water and alcohol is preferably used as the congelation liquid.

The temperature of the congelation liquid is preferably 0 to 50°C, more preferably 0 to 30°C from the viewpoint that the composition can be sufficiently coagulated. The temperature of the composition in extrusion of the composition into the congelation liquid is preferably 90 to 150°C, and more preferably 100 to 140°C from the viewpoint of fluidity of EVOH.

The composition is extruded into the congelation liquid and then coagulated as described above, and thus a congealed object obtained is a porous object with pores orientated.

A strand-shaped congealed object obtained may be cut by, for example, a strand cutter, and a strand-shaped coagulate obtained can be cut by, for example, a strand cutter, thereby providing a pellet-shaped EVOH porous object.

Examples of the method for obtaining the pellet-shaped EVOH porous object by direct cutting of the composition in a molten state include a method for obtaining the pellet-shaped EVOH porous object by hot cutting, hot cutting in water, or the like of a molten product of the composition, from an extruder.

The molten product of the composition is extruded and pelletized as described above, and thus a pellet obtained is a porous object with pores oriented.

A method for producing a powder-shaped EVOH porous object is not particularly limited, and such a porous object may be obtained by, for example, pulverizing the pellet-shaped porous object obtained by the above method, with a pulverizer or the like.

The EVOH porous object may comprise a solvent, and in a case where the solvent comprised is a good solvent for EVOH, the amount of the good solvent in EVOH is preferably reduced by drying or the like to such an extent that no pore of the EVOH porous object is clogged. In a case where the solvent comprised is a poor solvent for EVOH, such as water, the EVOH porous object may comprise such a poor solvent such as water in an amount of 5 parts by mass to 200 parts by mass with respect to 100 parts by mass of the EVOH porous object.

In one embodiment of the present invention, the content of EVOH comprised in the EVOH dispersion is preferably 5 mass% or more, more preferably 10 mass% or more, further preferably 15 mass% or more, and preferably 70 mass% or less, more preferably 60 mass% or less, and further preferably 50 mass% or less, with respect to the total mass of the dispersion.

The aldehyde comprised in the EVOH dispersion is not particularly limited, and examples thereof include formaldehyde, acetaldehyde, propionaldehyde, butylaldehyde, hexylaldehyde, benzaldehyde, isobutylaldehyde, 2-ethylhexylaldehyde, 2-methylbutylaldehyde, trimethyl acetaldehyde, 2-methylpentylaldehyde, 2,2-dimethylbutylaldehyde, 2-ethylbutylaldehyde, or 3,5,5-trimethylhexylaldehyde. These aldehydes may be used singly or in combination of two or more kinds thereof. In one embodiment of the present invention, the aldehyde is preferably butylaldehyde, benzaldehyde, or isobutylaldehyde, more preferably isobutylaldehyde, from the viewpoint that an acetalization product obtained can be enhanced in self-supporting ability and creep resistance under a high-temperature environment, and transparency. In one embodiment of the present invention, the aldehyde is preferably one having no carboxyl group from the viewpoint that an acetalization product obtained can be enhanced in transparency.

The content of the aldehyde comprised in the EVOH dispersion is not particularly limited and may be appropriately adjusted depending on the desired degree of acetalization. In one embodiment of the present invention, the content of the aldehyde may be preferably 1 to 40 parts by mass, more preferably 5 to 35 parts by mass, and further preferably 10 to 30 parts by mass with respect to 100 parts by mass of EVOH from the viewpoint that an acetalization product obtained can be enhanced in transparency and impact resistance.

Since the acetalization in the method of the present invention is performed by solid-liquid reaction, the solvent comprised in the EVOH dispersion is a poor solvent for EVOH and its acetalization product, and is preferably a solvent containing water, more preferably water.

The method for preparing the EVOH dispersion is not particularly limited, and the dispersion may be prepared by, for example, adding the aldehyde to a dispersion in which EVOH is dispersed in the solvent, or adding the solvent to a mixture of EVOH and the aldehyde.

In the method of the present invention, EVOH can be homogeneously acetalized by impregnating the interior of EVOH with the aldehyde due to impregnation of the ethylene/vinyl alcohol copolymer with at least one of the aldehyde after preparation of the EVOH dispersion and before addition of a catalyst, and thus the symmetry factor of an acetalization product obtained can be adjusted within the above range and transparency can be increased.

The temperature for impregnation of EVOH with the aldehyde is not particularly limited, and may be, for example, 20°C or more, and is preferably 30°C or more, more preferably 40°C or more, further preferably 50°C or more from the viewpoint that the interior of EVOH can be more quickly impregnated with the aldehyde. The temperature may be preferably 100°C or less, more preferably 90°C or less, further preferably 80°C or less from the viewpoint that fusion of EVOH can be suppressed.

The time for impregnation of EVOH with the aldehyde can be appropriately selected depending on the temperature of impregnation, a pore structure of the EVOH porous object, and the like, and may be preferably 10 minutes or more, more preferably 30 minutes or more, further preferably 60 minutes or more. The upper limit is not particularly limited, and may be, for example, 10 hours.

<Step (ii)>

Step (ii) is a step of impregnating EVOH with the aldehyde and then adding a catalyst to the EVOH dispersion prepared in step (i), thereby acetalizing EVOH. In the method of the present invention, the acetalization is performed by solid-liquid reaction. The acetalization is performed by solid-liquid reaction, and thus the Tm/Tg (K/K) of an acetalization product obtained can be adjusted within the above range and also the meso/racemo ratio in an acetal ring structure of the acetalization product can be adjusted within the above range, and therefore self-supporting ability and creep resistance under a high-temperature environment can be enhanced with transparency being kept. The acetalization is performed by solid-liquid reaction, thus an acetalization product generated can be separated from the reaction liquid by filtering operation, the acetalization product can be produced at a good efficiency and the acetalization product can be produced at a high yield. In the present invention, the method for performing the acetalization by solid-liquid reaction (hereinafter, also referred to as "solid-liquid method") refers to a method where a poor solvent for EVOH and an acetalization product of EVOH, produced by the acetalization, is used as a solvent of acetalization reaction, thereby obtaining an acetalization product generated, as a solid dispersed in a dispersion, without dissolution of EVOH and the acetalization product in a solvent in an acetalization step.

The catalyst of the acetalization is not particularly limited, and may be an organic acid or an inorganic acid, and examples thereof include an acidic catalyst such as acetic acid, para-toluenesulfonic acid, nitric acid, sulfuric acid, hydrochloric acid, phosphoric acid, or carbonic acid. Among these catalysts, an inorganic acid such as hydrochloric acid, sulfuric acid, or nitric acid is preferable from the viewpoint that the reaction rate of acetalization reaction can be increased, washing off from an acetalization product generated is easy, and the acetalization product can be produced at a good efficiency.

The amount of the catalyst added to the EVOH dispersion can be appropriately selected depending on the type of the catalyst and the reaction temperature. For example, the concentration of the catalyst in the EVOH dispersion may be preferably 0.001 to 1.0 mol/L, more preferably 0.01 to 0.8 mol/L, and further preferably 0.05 to 0.5 mol/L.

The method for adding the catalyst to the EVOH dispersion is not particularly limited, and, for example, the catalyst may be added to the EVOH dispersion at one time or in multiple portions. The catalyst is preferably added to the EVOH dispersion in multiple portions, in particular, preferably in two portions, from the viewpoint that an acetalization product small in haze and excellent in transparency can be obtained.

In a case where the catalyst is added to the EVOH dispersion in multiple portions, the amount of the first addition of the catalyst is preferably 50 mass% or less, more preferably 40 mass% or less, and further preferably 30 mass% or less, with respect to the total amount of addition. When the amount of the first addition of the catalyst is equal to or less than the upper limit, the distribution of the degree of acetalization is narrow and an acetalization product obtained can be enhanced in transparency.

The reaction temperature of the acetalization is preferably equal to or less than the glass transition temperature of EVOH from the viewpoint that a pore in the EVOH porous object can be retained. The reaction temperature may be more preferably 10 to 80°C, more preferably 20 to 70°C, and further preferably 30 to 60°C. The acetalization may be performed in air or in an inert gas such as a nitrogen gas or an argon gas, and may be performed under any of ordinary pressure, pressure, or reduced pressure.

After acetalization reaction, a reaction liquid obtained may be, if necessary, neutralized with alkali, and thereafter the acetalization product may be separated and purified from the reaction liquid by a common method, for example, a separation procedure such as filtration, concentration, re-precipitation, or re-crystallization. A neutralized salt generated by such neutralization is preferably removed by washing or the like. The alkali usable in such neutralization is not particularly limited, and examples thereof include sodium hydroxide, potassium hydroxide, ammonia, sodium acetate, sodium carbonate, sodium hydrogen carbonate, or potassium carbonate.

[Composition]

The present invention also encompasses a composition comprising the acetalization product of the present invention (hereinafter, also referred to as "acetalization product (A)"), and at least one component selected from the group consisting of a resin (B) other than the acetalization product (A), a plasticizer, an antioxidant and an ultraviolet absorber, in which the content of the acetalization product (A) is 70 mass% or more.

The composition of the present invention contains 70 mass% or more of the acetalization product (A) of the present invention, and thus a resin sheet that has excellent transparency and penetration resistance and that is excellent in self-supporting ability and creep resistance under a high-temperature environment can be formed. The content of the acetalization product (A) in the composition of the present invention may be preferably 75 mass% or more, more preferably 80 mass% or more, and further preferably 90 mass% or more. When the content of the acetalization product (A) is equal to or more than the lower limit, transparency, and self-supporting ability and creep resistance under a high-temperature environment can be enhanced. The upper limit is not particularly limited, and may be, for example, 100 mass% or less.

The composition of the present invention comprises, in addition to the acetalization product (A), at least one component selected from the group consisting of a resin (B) other than the acetalization product (A), a plasticizer, an antioxidant and an ultraviolet absorber.

The resin (B) other than the acetalization product (A), which can be comprised in the composition of the present invention, is not particularly limited, and examples thereof include a polyolefin resin such as polyethylene, polypropylene, polybutene-1, poly-4-methylpentene-1, or polynorbornene; an ethylene-based ionomer; a styrene-based resin such as polystyrene, a styrene-maleic anhydride copolymer, high-impact polystyrene, an AS resin, an ABS resin, an AES resin, an AAS resin, an ACS resin, or a MBS resin; a methyl methacrylate-based polymer, a methyl methacrylate-styrene copolymer; a polyester resin such as polyethylene terephthalate, or polybutylene terephthalate; polyamide such as nylon 6, nylon 66, or a polyamide elastomer; polycarbonate, polyvinyl chloride, polyvinylidene chloride, polyvinyl alcohol, polyacetal, polyvinylidene fluoride, polyurethane, modified polyphenylene ether, polyphenylene sulfide, a silicone-modified resin, acrylic rubber, an acrylic thermoplastic elastomer, or silicone rubber; a styrene-based thermoplastic elastomer such as SEPS, SEBS, or SIS; olefinic rubber such as IR, EPR, or EPDM, an ethylene/vinyl alcohol copolymer, and an acetalization product of an ethylene/vinyl alcohol copolymer other than the acetalization product (A) (hereinafter, also referred to as "acetalization product (B)"). These resins may be adopted singly or in combination of two or more kinds thereof.

When the acetalization product (A) satisfies expression (1) and expression (2), examples of the acetalization product (B) include an acetalization product of an ethylene/vinyl alcohol copolymer, satisfying the following expression (3):

$$Tm/Tg < 1.27 \quad (3)$$

wherein Tm and Tg respectively represent a melting peak temperature (kelvin) and an intermediate glass transition temperature (kelvin) measured according to JIS K7121:2012.

When the acetalization product (A) satisfies expression (1) and the meso/racemo ratio in an acetal ring structure is less than 5, examples include an acetalization product of an ethylene/vinyl alcohol copolymer, in which the meso/racemo ratio in an acetal ring structure is 5 or more.

Among these resins, the resin (B) other than the acetalization product (A) is preferably an ethylene/vinyl alcohol copolymer or an acetalization product (B), more preferably an acetalization product (B), from the viewpoint that transparency can be enhanced.

Examples of the ethylene/vinyl alcohol copolymer include ethylene/vinyl alcohol copolymers described in the section [Method for producing acetalization product of ethylene/vinyl alcohol copolymer], listed with respect to a raw material of the acetalization product of the present invention. The ethylene/vinyl alcohol copolymer as the resin (B) may be a porous object or is not necessarily a porous object.

The acetalization product (B) is not particularly limited as long as it is an acetalization product of an ethylene/vinyl alcohol copolymer, other than the acetalization product (A), for example, an acetalization product of an ethylene/vinyl alcohol copolymer, which satisfies the expression (3) and/or in which the meso/racemo ratio in an acetal ring structure is 5 or more, and the acetalization product (B) may be a resin containing an ethylene unit, a vinyl alcohol unit, an acetal unit, and optionally a vinyl ester unit. The content of each unit, the degree of acetalization, the melting peak temperature Tms, the MFR and the $\Delta H_{AH}/\Delta H_A$ of the acetalization product (B) may be the same as those described in the section [Acetalization product of ethylene/vinyl alcohol copolymer].

In one embodiment of the present invention, the Tm/Tg (K/K) of the acetalization product (B) is preferably less than 1.27, more preferably 1.25 or less, further preferably 1.23 or less, particularly preferably 1.21 or less, from the viewpoint that transparency can be enhanced, and is preferably 1.10 or more, more preferably 1.12 or more, and further preferably 1.15 or more, from the viewpoint that self-supporting ability and creep resistance under a high-temperature environment can be enhanced. The Tm/Tg (K/K) can be determined by the same method as in the acetalization product (A).

The content of the resin (B) is preferably 25 parts by mass or less based on 100 parts by mass of the acetalization product (A), from the viewpoint that a resin sheet obtained can be enhanced in self-supporting ability and creep resistance under a high-temperature environment, and may be, for example, 0 parts by mass or more, preferably 5 parts by mass or more, more preferably 10 parts by mass or more, further preferably 15 parts by mass or more, and particularly preferably 20 parts by mass or more based on 100 parts by mass of the acetalization product (A), from the viewpoint that the composition can be increased in fluidity and enhanced in moldability.

Examples of the plasticizer that can be comprised in the composition of the present invention include triethylene glycol-di-2-ethylhexanoate, tetraethylene glycol-di-2-ethylhexanoate, di-(2-butoxyethyl)-adipic acid ester (DBEA), di-(2-butoxyethyl)-sebacic acid ester (DBES), di-(2-butoxyethyl)-azelaic acid ester, di-(2-butoxyethyl)-glutaric acid ester, di-(2-butoxyethoxyethyl)-adipic acid ester (DBEEA), di-(2-butoxyethoxyethyl)-sebacic acid ester (DBEES), di-(2-butoxyethoxyethyl)-azelaic acid ester, di-(2-butoxyethoxyethyl)-glutaric acid ester, di-(2-hexoxyethyl)-adipic acid ester, di-(2-hexoxyethyl)-sebacic acid ester, di-(2-hexoxyethyl)-azelaic acid ester, di-(2-hexoxyethyl)-glutaric acid ester, di-(2-hexoxyethoxyethyl)-adipic acid ester, di-(2-hexoxyethoxyethyl)-sebacic acid ester, di-(2-hexoxyethoxyethyl)-azelaic acid ester, di-(2-hexoxyethoxyethyl)-glutaric acid ester, di-(2-butoxyethyl)-phthalic acid ester and/or di-(2-butoxyethoxyethyl)-phthalic acid ester, polypropylene glycol (PPG), monopropylene glycol dibenzoate, triethylene glycol di-2-ethylhexoate, and glycerin mono-12-hydroxystearate. In one embodiment of the present invention, among these plasticizers, preferred is a plasticizer where the sum of the numbers of carbon atoms and oxygen atoms constituting the molecule is 28 or more. Examples of such a plasticizer include triethylene glycol-di-2-ethylhexanoate, tetraethylene glycol-di-2-ethylhexanoate, di-(2-butoxyethyl)-adipic acid ester (DBEA), di-(2-butoxyethoxyethyl)-adipic acid ester, di-(2-butoxyethoxyethyl)-sebacic acid ester, and polypropylene glycol (PPG: average molecular weight 400). These plasticizers may be adopted singly or in combination of two or more kinds thereof.

In one embodiment of the present invention, the SP value of the plasticizer is preferably 9.2 $(cal/cm^3)^{1/2}$ or more, more preferably 9.3 $(cal/cm^3)^{1/2}$ or more, further preferably 9.5 $(cal/cm^3)^{1/2}$ or more, particularly preferably 10.0 $(cal/cm^3)^{1/2}$ or more, and preferably 12.0 $(cal/cm^3)^{1/2}$ or less, more preferably 11.8 $(cal/cm^3)^{1/2}$ or less, further preferably

11.5 (cal/cm$^3$)$^{1/2}$ or less, and particularly preferably 11.2 (cal/cm$^3$)$^{1/2}$ or less. When the SP value is equal to or more than the lower limit, and/or equal to or less than the upper limit, bleedout of a plasticizer can be suppressed and penetration resistance of a resin sheet obtained can be more enhanced. The SP value is a value calculated according to the Fedors calculation method (R.F.Fedors, Polym. Eng. Sci., 14, 147 (1947)).

The content of the plasticizer is preferably 40 parts by mass or less, more preferably 30 parts by mass or less, further preferably 20 parts by mass or less, and particularly preferably 15 parts by mass or less based on 100 parts by mass of the acetalization product (A), from the viewpoint that self-supporting ability and creep resistance under a high-temperature environment, and water resistance can be enhanced, and from the viewpoint that adhesiveness to a substrate such as glass, in particular, low-temperature adhesiveness can be enhanced. The content of the plasticizer may be preferably 0 parts by mass or more, more preferably 3 parts by mass or more, further preferably 5 parts by mass or more, still more preferably 10 parts by mass or more, particularly preferably 15 parts by mass or more, and in particular, more preferably 17.5 parts by mass or more based on 100 parts by mass of the acetalization product (A). When the content of the plasticizer is equal to or more than the lower limit, in particular, 10 parts by mass or more based on 100 parts by mass of the acetalization product (A), bleedout of the plasticizer can be suppressed and penetration resistance can be enhanced.

Examples of the antioxidant that can be comprised in the composition of the present invention include a phenol-based antioxidant, a phosphorus-based antioxidant, or a sulfur-based antioxidant. These antioxidants may be adopted singly or in combination of two or more kinds thereof.

Examples of the phenol-based antioxidant include an acrylate-based compound such as 2-t-butyl-6-(3-t-butyl-2-hydroxy-5-methylbenzyl)-4-methylphenyl acrylate or 2,4-di-t-amyl-6- (1-(3,5-di-t-amyl-2-hydroxyphenyl)ethyl)phenyl acrylate, an alkyl-substituted phenol-based compound such as 2,6-di-t-butyl-4-methylphenol, 2,6-di-t-butyl-4-ethylphenol, octadecyl-3-(3,5-)di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), ethylenebis(oxyethylene)bis(3- (5-t-butyl-4-hydroxy-m-tolyl)propionate, 4,4'-thiobis(3-methyl-6-t-butylphenol), bis(3-cyclohexyl-2-hydroxy-5-methylphenyl) methane, 3,9-bis(2-(3-(3-t-butyl-4-hydroxy-5-methylphenyl)propionyloxy)-1,1-dimethylethyl)-2,4,8,10-tetraoxaspiro [5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3',5'-di-t-butyl-4'-hydroxyphenyl)propionate)methane, triethylene glycol bis(3-(3-t-butyl-4-hydroxy-5-methylphenyl)propionate), or hexamethylenebis(3-(3,5-di-t-butyl-4-hydroxyphenyl)propionate, or a triazine group-containing phenol-based compound such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine or 6-(4-hydroxy-3-methyl-5-t-butylanilino)-2,4-bis-octylthio-1,3,5-triazine or 2-octylthio-4,6-bis-(3,5-di-t-butyl-4-oxyanilino)-1,3,5-triazine.

Examples of the phosphorus-based antioxidant include a monophosphite-based compound such as triphenyl phosphite, diphenylisodecyl phosphite, phenyldiisodecyl phosphite, tris(nonylphenyl)phosphite, tris(dinonylphenyl)phosphite, tris(2-t-butyl-4-methylphenyl)phosphite, tris(cyclohexylphenyl)phosphite, 2,2-methylenebis(4,6-di-t-butylphenyl) octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide or 10-desiloxy-9,10-dihydro-9-oxa-10-phosphaphenanthrene, or a diphosphite-based compound such as 4,4'-butylidene-bis(3-methyl-6-t-butylphenyl-di-tridecyl phosphite), 4,4'-isopropylidene-bis(phenyl-di-alkyl(C12 to C15)phosphite), 4,4'-isopropylidene-bis(diphenylmonoalkyl(C12 to C15)phosphite), 1,1,3-tris(2-methyl-4-di-tridecyl phosphite-5-t-butylphenyl)butane or tetrakis(2,4-di-t-butylphenyl)-4,4'-biphenylene phosphite. In particular, a monophosphite-based compound is preferable.

Examples of the sulfur-based antioxidant include dilauryl 3,3'-thiodipropionate, distearyl 3,3'-thiodipropionate, lauryl stearyl 3,3'-thiodipropionate, pentaerythritol-tetrakis-(β-lauryl -thiopropionate), or 3,9-bis(2-dodecylthioethyl)-2,4,8,10-tetraoxaspiro[5,5]undecane.

In particular, the antioxidant is preferably a phenol-based antioxidant, more preferably an alkyl-substituted phenol-based antioxidant.

The content of the antioxidant is preferably 0 to 5 parts by mass, more preferably 0.001 to 5 parts by mass, and further preferably 0.01 to 1 part by mass based on 100 parts by mass of the acetalization product (A).

Examples of the ultraviolet absorber that can be comprised in the composition of the present invention include a benzotriazole-based ultraviolet absorber such as 2-(5-methyl-2-hydroxyphenyl)benzotriazole, 2-[2-hydroxy-3,5-bis(α,α'dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole or 2-(2-hydroxy-5-t-octylphenyl)benzotriazole, or a benzoate-based ultraviolet absorber such as 2,4-di-t-butylphenyl-3,5-di-t-butyl-4-hydroxybenzoate or hexadecyl-3,5-di-t-butyl-4-hydroxybenzoate.

The content of the ultraviolet absorber may be preferably 0 to 50000 ppm, more preferably 10 to 50000 ppm, and further preferably 100 to 10000 ppm on a mass basis relative to the acetalization product (A).

The composition of the present invention may, if necessary, further comprise an additive other than the above. Examples of the additive optionally comprised include an additive such as a light stabilizer, an adhesive modifier, an adhesive enhancer, a blocking prevention agent, a pigment, a dye, or a functional inorganic compound. Among these additives, a light stabilizer, an adhesive modifier, or an adhesive enhancer is preferable. These additives may be adopted singly or in combination of two or more kinds thereof.

Examples of light stabilizer include a hindered amine-based compound such as 2,2,6,6-tetramethyl-4-piperidylbenzoate, bis(2,2,6,6-tetramethyl-4-piperidyl)sebacate, bis(1,2,2,6,6-pentamethyl-4-piperidyl)-2-(3,5-di-t-butyl-4-hydroxybenzyl)-2-n-butylmalonate, 4-(3-(3,5-di-t-butyl-4-hydroxyphenyl)propionyloxy)-1-(2-(3-(3,5-di-t-butyl-4-hydroxyphenyl)propionyloxy)ethyl)-2,2,6,6-tetramethylpiperidine, or bis(2,2,6,6-tetramethyl-1-(octyloxy)-4-piperidine) sebacate.

The adhesive modifier is an additive that reduces adhesion force. Examples of the adhesive modifier include an adhesive modifier disclosed in WO 03/033583, preferably includes an alkali metal salt and/or an alkali earth metal salt of an organic acid. Examples more preferably include a potassium salt, a magnesium salt or a calcium salt of a carboxylic acid having 1 to 16 carbon atoms, such as potassium acetate, magnesium acetate, magnesium propionate, magnesium butyrate, magnesium 2-ethylbutyrate, magnesium 2-ethylhexanoate, magnesium octylate, magnesium decanoate, magnesium neodecanoate, or calcium stearate.

Examples of the adhesive enhancer include a silane coupling agent. Examples of the silane coupling agent include 3-glycidoxypropyltrimethoxysilane, 3-glycidoxypropyldiethoxysilane, N-(2-aminoethyl)-3-aminopropyltrimethoxysilane, or N-(2-aminoethyl)-3-aminopropyldiethoxysilane. These silane coupling agents may be adopted singly or in combination of two or more kinds thereof.

In a case where the composition of the present invention comprises the adhesive modifier or the adhesive enhancer, the content may be appropriately selected depending on the type of the adhesive improver and the environment where, in a case where the resin composition is used as a raw material of a laminated glass interlayer, the laminated glass is used. For example, the content of the adhesive enhancer is preferably adjusted so that the adhesion force of glass to a resin sheet obtained is generally 3 to 10 in a Pummel test (described in WO 03/033583), in particular, preferably 3 to 6 in a case where high penetration resistance is required, preferably 7 to 10 in a case where high glass shatterproof properties are required. In a case where high glass shatterproof properties are demanded, no addition of any adhesive enhancer is also a useful method.

In a case where the composition of the present invention comprises the adhesive enhancer, the content may be preferably 0.001 to 5 parts by mass, and more preferably 0.01 to 1 part by mass based on 100 parts by mass of the acetalization product (A).

The contents of such various additives can be appropriately selected as long as the effects of the present invention are not impaired, and the total content of such various additives may be preferably 7 mass% or less, more preferably 5 mass% or less, further preferably 4 mass% or less with respect to the total mass of the composition.

In one embodiment of the present invention, the melting peak temperature Tms of the composition of the present invention, measured by according to JIS K7121:2012, is preferably 120 to 180°C, more preferably 120°C to 175°C, further preferably 120°C to 170°C, more preferably 125 to 150°C, further preferably 128 to 145°C, and particularly preferably 130 to 140°C. When the melting peak temperature Tms of the composition is within the above range, transparency can be enhanced. In another embodiment of the present invention, the melting peak temperature Tms may be 140 to 170°C, or may be preferably 145 to 165°C, and further preferably 150 to 160°C. When the melting peak temperature Tms of the composition is within the above range, self-supporting ability and creep resistance under a high-temperature environment can be enhanced.

In one embodiment of the present invention, the melt flow rate (MFR) of the composition of the present invention, measured under conditions of 190°C and 2.16 Kg according to JIS K7210-1:2014, may be preferably 1 to 30 g/10 min, more preferably 2 to 20 g/10 min, and further preferably 3 to 10 g/10 min from the viewpoint that degradation due to heat in molding processing can be inhibited.

In one embodiment of the present invention, the composition of the present invention preferably satisfies, from the viewpoint that transparency and film formability can be enhanced, the following expression (4):

$$\Delta H_{AH}/\Delta H_A \leq 0.30 \quad (4)$$

wherein $\Delta H_A$ represents an amount of heat of crystal fusion, measured with a differential scanning calorimeter (DSC), by temperature rise from 25°C to 140°C at a rate of temperature rise of 10°C/min, retention at 140°C for 30 minutes, then temperature drop from 140°C to -30°C at a rate of temperature drop of 4°C/min, and again temperature rise from -30°C to 200°C at a rate of temperature rise of

10°C/min, and $\Delta H_{AH}$ represents an amount of heat of crystal fusion at a higher temperature in peak division at 145°C of the $\Delta H_A$.

The $\Delta H_{AH}/\Delta H_A$ in the expression represents the proportion of a high-melting point component relative to the entire crystal component in the composition, and the high-melting point component includes EVOH and/or an EVOH acetalization product low in degree of acetalization. In one embodiment of the present invention, the $\Delta H_{AH}/\Delta H_A$ is preferably 0.30 or less, more preferably 0.25 or less, and further preferably 0.20 or less, from the viewpoint that transparency and film formability can be enhanced, and is preferably 0.01 or more, more preferably 0.02 or more, and further preferably 0.03 or more, from the viewpoint that self-supporting ability and creep resistance under a high-temperature environment can be enhanced. The $\Delta H_{AH}/\Delta H_A$ can be determined with a differential scanning calorimeter (DSC), and can be determined by, for example, a method described in Examples.

In another embodiment of the present invention, the composition of the present invention may be, from the viewpoint that self-supporting ability and creep resistance under a high-temperature environment can be enhanced, a composition satisfying the following expression (5):

$$0.30<\Delta H_{AH}/\Delta H_A \quad (5)$$

wherein $\Delta H_{AH}$ and $\Delta H_A$ are respectively the same as $\Delta H_{AH}$ and $\Delta H_A$ in the expression (4).
In another embodiment of the present invention, the $\Delta H_{AH}/\Delta H_A$ may be more than 0.30, or may be preferably 0.305 or more, and more preferably 0.31 or more, from the viewpoint that self-supporting ability and creep resistance under a high-temperature environment can be enhanced. It may also be preferably 0.60 or less, more preferably 0.50 or less, and further preferably 0.40 or less, from the viewpoint that transparency and film formability can be enhanced.

In one suitable embodiment of the present invention, a resin sheet obtained from the composition of the present invention exhibits the same values of the haze, the haze in slow cooling, the storage elastic modulus, the relaxation modulus, and the penetration energy, of the resin sheet of the present invention, described in the section [Resin sheet] described below. Accordingly, the composition of the present invention can allow for formation of a resin sheet that has excellent transparency and penetration resistance and that is excellent in self-supporting ability and creep resistance under a high-temperature environment.

The acetalization product of the present invention and the composition of the present invention are not particularly limited in terms of applications, and are each used as, for example, a packaging material in various fields. Such a packaging material is used, for example, as a container excellent in oxygen barrier properties, in the form of a bag, a tube, a cup, a pouch, or the like for applications of foods, cosmetics, pharmaceutical products, toiletries, vacuum insulation plates, and the like, or as a gas barrier film for a food packaging application, a petrol tank application, a vacuum insulation plate application, a heat pipe, and the like. The acetalization product of the present invention and the composition of the present invention are also each useful for, for example, a fiber sizing agent, a fiber treatment agent, a fiber processing agent, a sizing agent for fiber products, a clear coating agent of paper, a pigment coating agent of paper, an internal sizing agent of paper, a paper processing agent such as a binder for overcoating of heat-sensitive paper, a pressure-sensitive adhesive, an antifogging agent, paint, a dispersant for organic and inorganic pigments, a polymerization dispersion stabilizer for emulsions, a polymerization dispersion stabilizer for vinyl chloride, an adhesive for paper, wood, plastics, and the like, a binder for unwoven cloths, a binder for fibers, a binder for ceramics, a binder for electrodes, a binder for various building materials such as gypsum boards or fiberboards, an additive for cement or mortar, a hot-melt adhesive, a resin for 3D printers, an additive for films of displays, an interlayer adhesive for ceramic stacked bodies, an adhesive composition such as liquid glue or solid glue, a separator for storage batteries, a laminate with a fluororesin, a laminate with rubber or the like, such as a tire inner liner, or a composite laminate with a fiber substrate. The acetalization product of the present invention and the composition of the present invention are each high in transparency, and thus also useful as a laminated glass interlayer, a film for agriculture greenhouses, a laminate with a transparent resin such as resin grazing for vehicles, a laminate with an antenna circuit board, a protective film of a glass surface, or any of various transparent containers in cosmetic applications.

[Resin sheet]

The present invention also encompasses a resin sheet comprising one or more layers each containing the acetalization product of EVOH of the present invention or the composition of the present invention (hereinafter, each also referred to as "layer (x)"). The resin sheet of the present invention may be configured from only the layer (x) or may be a laminate comprising at least one such layer (x). The laminate is not particularly limited, and examples thereof include a laminate comprising two or more such layers (x), and a laminate comprising one or more such layers (x) and one or more other layers. In a case where such a layer (x) or other layer comprises a plurality of layers, the respective resins or resin compositions constituting such layers may be the same or different.

Examples of such other layer include a layer including a known resin. The resin here used can be polyethylene, polypropylene, polyvinyl chloride, polystyrene, polyurethane, polytetrafluoroethylene, an acrylic resin, polyamide, polyacetal, polycarbonate, polyethylene terephthalate or polybutylene terephthalate in polyester, cyclic polyolefin, polyphenylene sulfide, polytetrachloroethylene, polysulfone, polyethersulfone, polyarylate, a liquid crystal polymer, polyimide, a thermoplastic elastomer, or the like. Such other layer may also comprise, if necessary, one or more additives, for example, the additive, including the plasticizer, the antioxidant, and the ultraviolet absorber, and/or a heat shield material (for example, an inorganic heat-shielding fine particle or an organic heat-shielding material having infrared absorption ability).

In one embodiment of the present invention, the resin sheet of the present invention preferably has a concave-convex structure on its surface from the viewpoint of preventing adhesion between the resin sheet and from the viewpoint of an increase in degassing ability in a lamination step. Examples of the method for providing the concave-convex structure include a conventionally known method, and examples thereof include a method including providing a melt fracture structure by adjustment of extrusion conditions, or a method including providing an embossed structure on an extruded sheet. The depth and shape of embossment may be those conventionally known.

The thickness of such one layer (x) in the resin sheet is preferably 0.1 mm or more, more preferably 0.4 mm or more, further preferably 0.7 mm or more, and preferably 3 mm or less, more preferably 2.5 mm or less, further preferably 2 mm or less, still more preferably 1.5 mm or less, particularly preferably 1 mm or less. In a case where a plurality of such layers (x) is present in the resin sheet, the respective thickness of such layers (x) in the resin sheet may be the same or different.

The thickness of the resin sheet is preferably 0.1 mm or more, more preferably 0.4 mm or more, and further preferably 0.7 mm or more from the viewpoint that penetration resistance can be increased, and preferably 3 mm or less, more preferably 2.5 mm or less, further preferably 2 mm or less, still more preferably 1.5 mm or less, and particularly preferably 1 mm or less, from the viewpoint that handling is easy.

The thickness of such one layer (x) in the resin sheet and the thickness of the resin sheet are measured by a conventionally known method, for example, with a contact or non-contact thickness meter.

The resin sheet of the present invention has excellent transparency. The haze of the resin sheet of the present invention is preferably 5% or less, more preferably 3% or less, further preferably 2% or less, and particularly preferably 1% or less. As the haze is smaller, the resin sheet is increased in transparency, and thus the lower limit is not particularly limited and may be, for example, 0.01% or more. The haze of the laminated glass is measured with a haze meter according to JIS K7136:2000.

The resin sheet of the present invention is also excellent in transparency after heating to 140°C and then slow cooling from 140°C to 23°C at a rate of 0. 1°C/min (transparency in slow cooling). The transparency in slow cooling can be evaluated by the haze during slow cooling (haze in slow cooling). The haze in slow cooling of the resin sheet of the present invention is preferably 5% or less, more preferably 4% or less, further preferably 3% or less, still more preferably 2% or less, and particularly preferably 1% or less. As the haze is smaller, the resin sheet is increased in transparency, and thus the lower limit is not particularly limited and may be, for example, 0.01% or more. The haze in slow cooling of the resin sheet is determined by producing a laminated glass comprising the resin sheet as an interlayer, and measuring the haze after the laminated glass is heated to 140°C and then slow cooled from 140°C to 23°C at a rate of 0.1°C/min, with a haze meter according to JIS K7136:2000, and the haze can be determined by, for example, a method described in Examples.

In one embodiment of the present invention, the storage elastic modulus (E') at 50°C and a frequency of 1 Hz of the resin sheet of the present invention, measured by dynamic viscoelasticity measurement, may be preferably 20 MPa or more, more preferably 30 MPa or more, further preferably 60 MPa or more, and still more preferably 100 MPa or more from the viewpoint that self-supporting ability can be enhanced, and may be preferably 1500 MPa or less, more preferably 1200 MPa or less, and further preferably 900 MPa or less, from the viewpoint that penetration resistance can be increased.

The resin sheet of the present invention is excellent in self-supporting ability under a high-temperature environment. The self-supporting ability under a high-temperature environment can be evaluated by the storage elastic modulus (E') at 80°C and a frequency of 1 Hz. In one embodiment of the present invention, the storage elastic modulus at 80°C and a frequency of 1 Hz of the resin sheet of the present invention is preferably 5 MPa or more, more preferably 7 MPa or more, and further preferably 10 MPa or more. The upper limit of the storage elastic modulus is not particularly limited and may be 50 MPa or less.

The storage elastic moduli at 50°C and 80°C can be each measured with a dynamic viscoelasticity measurement apparatus by, for example, a method described in Examples.

The resin sheet of the present invention is excellent in creep resistance under a high-temperature environment, and thus can keep high strength even after a lapse of a long time. Accordingly, in a case where the resin sheet of the present invention is used as a laminated glass interlayer, the resin sheet is hardly reduced in strength even in use for a long time, and thus safety can be secured. The creep resistance under a high-temperature environment can be evaluated by a relaxation modulus (relaxation modulus for a long time) after a lapse of a long time, for example, a relaxation modulus after $3.2 \times 10^8$ seconds (after about 10 years) in a master curve created at 50°C. In one embodiment of the present invention, the relaxation modulus after $3.2 \times 10^8$ seconds (after about 10 years) in a master curve created at 50°C is preferably 0.50 MPa or more, more preferably 0.60 MPa or more, further preferably 0.7 MPa or more, particularly preferably 0.8 MPa or more, most preferably 1.0 MPa or more. When the relaxation modulus is equal to or more than the lower limit, the resin sheet and a laminated glass comprising the resin sheet as an interlayer can exhibit excellent strength even after a lapse of a long time. The upper limit of the relaxation modulus may be usually 5.0 MPa or less, and is preferably 4.0 MPa or less, more preferably 3.5 MPa or less, further preferably 3.0 MPa or less, and particularly preferably 2.0 MPa or less, from the viewpoint of handleability of the resin sheet. The relaxation modulus can be determined from a composite curve (referred to as master curve) at a reference temperature of 50°C, obtained from dynamic viscoelasticity measurement and the time-temperature conversion law by use of a dynamic viscoelasticity measurement apparatus after the resin sheet is left to still stand under an atmosphere at 23°C and 50% RH for 1 week or more, and the relaxation modulus can be determined, for example, a method described in Examples.

In another embodiment of the present invention, the relaxation modulus after $2.6 \times 10^6$ seconds (after about 1 month) in a master curve created at 80°C, of the resin sheet of the present invention, may be preferably 0.5 MPa or more, more preferably 1.0 MPa or more, further preferably 1.5 MPa or more, and particularly preferably 2.0 MPa or more. The upper limit of the relaxation modulus is not particularly limited, and may be, for example, 20 MPa or less.

The resin sheet of the present invention is excellent in penetration resistance. The penetration resistance of the resin sheet can be evaluated by penetration energy. The penetration energy of the resin sheet of the present invention may be preferably 10 J or more, more preferably 12 J or more, further preferably 14 J or more. The upper limit of the penetration energy is not particularly limited, and may be, for example, 30 J or less. The penetration energy can be measured with a dropping weight type impact testing machine according to ASTM D3763, with as a test piece, for example, a sheet having a thickness of 0.8 mm obtained by compression molding of a melt-kneaded product of the acetalization product or the composition comprising the acetalization product at 200°C and at a pressure of 50 kgf/$cm^2$ (50 MPa) for 5 minutes, and the penetration energy can be measured by, for example, a method described in Examples.

[Method for producing resin sheet]

The method for producing the resin sheet of the present invention is not particularly limited, and the acetalization product of the present invention or the composition of the present invention may be molded into a sheet shape by, for example, a known method such as extrusion molding, press molding, blow molding, injection molding, or a solution casting method. Among known methods, a method is suitably used where the acetalization product and, if necessary, an additive are fed to an extruder and kneaded and molten, and then a melt-kneaded product obtained is extruded from a die, and drawn by a drawing machine and molded into a sheet shape. The resin temperature in extrusion is preferably 170 to 250°C, more preferably 180 to 240°C, and further preferably 190 to 220°C. When the resin temperature in extrusion is equal to or less than the upper limit, the acetalization product is suppressed in decomposition and hardly colored. When the resin temperature in extrusion is equal to or more than the lower limit, the acetalization product is completely molten, and a sheet having a favorable appearance can be obtained and generation of a volatile substance can be suppressed. It is preferable for efficient removal of a volatile substance to remove such a volatile substance through a vent port of an extruder by reduced pressure.

[Laminated glass interlayer]

The resin sheet of the present invention is suitably used as a laminated glass interlayer (hereinafter, also simply referred to as "interlayer"). Accordingly, the present invention encompasses a laminated glass interlayer, comprising the resin sheet of the present invention. The laminated glass interlayer of the present invention is suitably used in various applications of moving vehicles such as automobiles, buildings, or solar cells. In one embodiment of the present invention, the laminated glass interlayer of the present invention is excellent in transparency, self-supporting ability, and adhesiveness to a substrate such as glass, and thus is particularly suitably used as a laminated glass interlayer, for structure materials.

[Laminated glass]

The present invention also encompasses a laminated glass having two glass plates, and the laminated glass interlayer of the present invention, disposed between the two glass plates. The laminated glass of the present invention comprises the laminated glass interlayer comprising the resin sheet of the present invention, and thus has excellent transparency.

Such a glass plate to be stacked with the interlayer can be, for example, inorganic glass such as float glass, reinforced glass, wired plate glass, or heat-absorbing plate glass, or conventionally known organic glass such as polymethyl methacrylate or polycarbonate. These may be each colorless or colored. These may be used singly or in combination of two or more kinds thereof. The thickness of one glass plate is not particularly limited, and may be, for example, 1 to 10 mm, and preferably 2 to 6 mm. The thicknesses of the two glass plates may be the same or different.

The laminated glass of the present invention can be produced by a conventionally known method. Examples include a method using a vacuum laminator apparatus, a method using a vacuum bag, a method using a vacuum ring, or a method using a nip roll. After temporary adhesion by the method, the resultant may be loaded to an autoclave and subjected to main adhesion.

In the case of use of a vacuum laminator apparatus, the laminated glass can be produced by, for example, laminating the glass plates, the interlayer, and any layer (for example, adhesive resin layer) under a reduced pressure of $1 \times 10^{-6}$ to $1 \times 10^{-1}$ MPa at 60 to 200°C, in particular, 80 to 160°C. A method using a vacuum bag or a vacuum ring has been described in, for example, EP 1235683 B, and the laminated glass can be produced by laminating the glass plates, the interlayer, and any layer under a pressure of about $2 \times 10^{-2}$ to $3 \times 10^{-2}$ MPa at 100 to 160°C.

Examples of a production method using a nip roll include a method including stacking the glass plates, the interlayer and any layer, and performing the first temporary adhesion at a temperature equal to or less than the flow starting temperature of the acetalization product and furthermore pressure bonding at a temperature near the flow starting temperature. Specific examples include a method including heating to 30 to 70°C by an infrared heater or the like and then degassing by a roll, and furthermore heating to 50 to 120°C and then pressure bonding by a roll for adhesion or temporary adhesion.

In the case of loading to an autoclave after temporary adhesion, and then further pressure bonding, operating conditions of an autoclave step are appropriately selected depending on the thickness and configuration of the laminated glass, and treatment is preferably made, for example, under a pressure of 1 to 1.5 MPa at 130 to 145°C for 1 to 3 hours.

The laminated glass of the present invention comprises the resin sheet of the present invention as a laminated glass interlayer, and thus has excellent transparency. The haze of the laminated glass of the present invention is preferably 5% or less, more preferably 3% or less, further preferably 2% or less, and particularly preferably 1% or less. As the haze is smaller, the laminated glass is increased in transparency, and thus the lower limit is not particularly limited and may be, for example, 0.01%. The haze of the laminated glass is measured with a haze meter according to JIS K7136:2000.

The laminated glass of the present invention is also excellent in transparency after heating to 140°C and then slow cooling from 140°C to 23°C at a rate of 0.1°C/min (transparency in slow cooling). The transparency in slow cooling can be evaluated by the haze during slow cooling (haze in slow cooling). The haze in slow cooling of the laminated glass of the present invention is preferably 5% or less, more preferably 4% or less, further preferably 3% or less, still more preferably 2% or less, particularly preferably 1% or less. As the haze is smaller, the laminated glass is increased in transparency, and thus the lower limit is not particularly limited and may be, for example, 0.01% or more. The haze in slow cooling is determined by measuring the haze after the laminated glass is heated to 140°C and then slow cooled from 140°C to 23°C at a rate of 0.1°C/min, with a haze meter according to JIS K7136:2000, and the haze can be determined by, for example, a method described in Examples.

In one embodiment of the present invention, the laminated glass is preferably excellent in adhesion force between the glass plate and the interlayer. In one embodiment of the present invention, the maximum shear stress measured by a compressive shear strength test described in WO 1999/058334 may be preferably 20 MPa or more, more preferably 22 MPa or more, further preferably 24 MP or more, and particularly preferably 25 MPa or more. The maximum shear stress may be preferably 40 MPa or less, more preferably 38 MPa or less, and further preferably 36 MPa or less. When the maximum shear stress is equal to or more than the lower limit, the adhesion force is sufficiently high to result in a tendency to enable scattering of glass to be suppressed in glass breakage, and when the maximum shear stress is equal to or less than the upper limit, deterioration in penetration resistance in glass breakage can be suppressed. The maximum shear stress in peeling of the laminated glass can be used as an index of low-temperature adhesiveness between the glass and the interlayer in the laminated glass. It is indicated that, as the maximum shear stress is higher, low-temperature adhesiveness between the glass and the interlayer is higher.

The laminated glass of the present invention can be suitably used in, for example, a front windshield for automobiles, a side glass for automobiles, a sunroof for automobiles, a rear windows for automobiles, a glass for head-up displays, a laminate for facades, exterior walls, or roofs, a building material such as a panel, a door, a window, a wall, a roof, a sunroof, a sound-insulating wall, a display window, a balcony, or a handrail wall, a partition glass member for conference rooms, or a solar panel, but not limited to these applications.

## Examples

Hereinafter, the present invention will be specifically described with reference to Examples and Comparative Examples, but the present invention is not limited to the following Examples.

Analysis methods and measurement methods of various physical properties of ethylene/vinyl alcohol copolymers (EVOHs) used as raw materials in Examples and Comparative Examples and acetalization products obtained of these ethylene/vinyl alcohol copolymers, and evaluation methods of resin sheets and laminated glasses are shown below.

<Content of each monomer unit and degree of acetalization>

The contents (unit: mol%) of the ethylene unit, the vinyl alcohol unit, and the acetal unit as a vinyl alcohol unit acetalized, and the degree of acetalization, with respect to each of ethylene/vinyl alcohol copolymers used as raw materials in Examples and Comparative Examples, and acetalization products of these ethylene/vinyl alcohol copolymers, obtained in Examples and Comparative Examples, were analyzed as follows.

Each of the ethylene/vinyl alcohol copolymers was dissolved in dimethylsulfoxide (DMSO) at 120°C, and the resulting DMSO solution was cooled to room temperature. Thereafter, N,N-dimethyl-4-aminopyridine and acetic anhydride were added to the DMSO solution, and stirred and reacted for 1 hour. The copolymer was re-precipitated from the resulting reaction liquid and washed, with ion-exchange water and acetone, and furthermore dried, thereby obtaining each ethylene/vinyl acetate copolymer. A solution of the ethylene/vinyl acetate copolymer obtained, in deuterated dimethylsulfoxide (DMSO-d6), was subjected to measurement with a 400-MHz proton NMR measurement apparatus at a cumulative number of 256. The ethylene unit content (n) with respect to the total monomer unit constituting the ethylene/vinyl alcohol copolymer was calculated from the intensity ratio between a peak (peak at 1.1 to 1.9 ppm) derived from a methine proton derived from the ethylene unit and the vinyl acetate unit and a peak (peak at 2.0 ppm) derived from a terminal methyl proton derived from the vinyl acetate unit in the ethylene/vinyl acetate copolymer, in a spectrum obtained.

The ethylene unit is not affected by acetalization reaction, and thus the ethylene unit content (n) in the ethylene/vinyl alcohol copolymer is equal to the ethylene unit content (n) with respect to the total monomer unit constituting an acetalization product of EVOH, obtained after acetalization of the ethylene/vinyl alcohol copolymer.

The vinyl alcohol unit content (l), the vinyl acetate unit content (m) and the acetal unit content (k) with respect to the total monomer unit constituting the acetalization product of EVOH were determined by the following method. A DMSO-d6 solution of the acetalization product of EVOH was subjected to measurement with a 400-MHz proton NMR measurement apparatus at a cumulative number of 256. The content of each of the monomer units was calculated from the intensity ratio between a peak (peak at 1.0 to 1.8 ppm) derived from a methine proton derived from the ethylene unit, the vinyl alcohol unit and the vinyl acetate unit and a peak (peak at 0.8 to 1.0 ppm) derived from a terminal methyl proton derived from the acetal unit in a spectrum obtained, and the ethylene unit content (n) of the ethylene/vinyl alcohol copolymer.

The degree of acetalization of the acetalization product of EVOH was determined with the vinyl alcohol unit content (l), the vinyl acetate unit content (m) and the acetal unit content (k) determined above, by the following expression.

$$\text{Degree of acetalization (mol\%)} = \{k/(k + l + m)\} \times 100$$

<Symmetry factor ($W_{0.05h}$/2f)>

The symmetry factor of the acetalization product obtained in each of Examples and Comparative Examples was determined by reversed-phase partition gradient high-performance liquid chromatography (HPLC) analysis with a water-ethanol eluent, performed under the following conditions, according to JIS K 0124:2011. In the symmetry factor, "$W_{0.05h}$" represents a peak width at a height of 1/20 the peak height from the baseline of a measurement peak obtained by HPLC analysis (position corresponding to 5% of the peak height), and "f" represents a distance at the rise of the peak in bisection of the peak width at a position corresponding to 5% of the peak height, with a perpendicular line containing the peak top.

(Measurement conditions of HPLC analysis)

Concentration of sample: 1.5 mg/1 g
Sample solvent: mixed solvent of EtOH (99.5%)/ion-exchange water = 9/1 wt%
Amount of injection: 20 μL
Detector: Varian 380-LC, EVAP 80°C (front-stage heating), NEB 50°C (second-stage heating), Gas 1.5 (SLM), interval of data capturing 1000 msec, filter 1 μm
ODS silica column: "Shimpack G-ODS manufactured by Shimadzu Corporation (spherical, totally porous silica gel modified by octadecyl group, 4 mm inner diameter × 10 mm length, grain size 5 μm)''
Column temperature: 45°C
Flow rate of liquid fed: total flow rate 0.4 mL/min
(Procedure of HPLC analysis)

Water was used as a mobile phase A and ethanol (99.5%) was used as a mobile phase B. The interior of the column in the HPLC system before sample injection is filled with a mixed solvent of mobile phase A/mobile phase B at a volume ratio of 95/5. The sample is injected in this state. The solvent is allowed to flow under the following conditions.

0 to 5 minutes (B concentration; _5%, constant)
5 to 25 minutes (B concentration; _5 to 100%)

25 to 30 minutes (B concentration; 100%, constant)
30 to 31 minutes (B concentration; 100 to 5%)
31 to 55 minutes (B concentration; _5%, constant)

<Tm/Tg (K/K)>

The melting peak temperature Tm (°C) and the intermediate glass transition temperature Tg (°C) were each measured with a differential scanning calorimeter (DSC) (TGA/DSC1 Star System manufactured by Mettler Toledo) according to JIS K7121:2012, by heating a sample with the acetalization product obtained in each of Examples and Comparative Examples, from 25°C to 230°C at a rate of temperature rise of 10°C/min to melt the sample, cooling the sample from 230°C to -30°C at a rate of temperature drop of 10°C/min, and then again raising the temperature from - 30°C to 230°C at a rate of temperature rise of 10°C/min. The values obtained were each converted into a kelvin (K) unit, and Tm/Tg (K/K) was calculated.

<Meso/racemo ratio>

13C-NMR measurement was carried out with a spectrometer AV600 model from Bruker. The acetalization product obtained in each of Examples and Comparative Examples was dissolved in deuterated dimethyl sulfoxide (DMSO) in a NMR tube having a diameter of 10 mm, and a 12 weight% acetalization product solution was produced. Chromium(III) acetylacetonate as a mitigant was added in an amount of 0.9 weight%. NMR measurement was carried out at 80°C in a gate decoupling mode. The meso/racemo ratio was calculated from the intensity ratio between a peak (peak at 98.0 to 102 ppm) derived from a methine C atom of an acetal moiety in a 6-membered butyral ring having a meso form and a peak (peak at 91.0 to 95.0 ppm) derived from a methine C atom of an acetal moiety in a 6-membered butyral ring having a racemo form, in the resulting spectrum.

<SP value>

The SP value of the acetalization product obtained in each of Examples and Comparative Examples, and the SP value of each plasticizer used in Examples and Comparative Examples were calculated according to the Fedors calculation method.

<Tms>

The melting peak temperature Tms (°C) was measured with a differential scanning calorimeter (DSC) (TGA/DSC1 Star System manufactured by Mettler

Toledo) according to JIS K7121:2012, by heating a sample with the acetalization product-containing composition obtained in each of Examples and Comparative Examples, from 25°C to 230°C at a rate of temperature rise of 10°C/min to melt the sample, cooling the sample from 230°C to -30°C at a rate of temperature drop of 10°C/min, and then again raising the temperature from -30°C to 230°C at a rate of temperature rise of 10°C/min.

<Melt flow rate (MFR)>

The melt flow rates of the ethylene/vinyl alcohol copolymers used in Examples and Comparative Examples were measured under conditions of 190°C and a load of 2.16 kg according to JIS K7210:2014.

<Pore median diameter and pore surface area>

An EVOH porous object obtained in each of Production Examples described below or the EVOH acetalization product obtained in each of Examples and Comparative Examples was freeze-dried at -80°C, thereafter 0.5 g thereof was taken in a 5-cc standard cell (stem volume 0.4 cc) for powders, and the pore median diameter and the pore surface area, in a pore diameter range of 0.005 to 100 μm, were measured with Micromeritics pore distribution measurement apparatus (AutoPore V9620 manufactured by SHIMADZU CORPORATION) under a condition of an initial pressure of 2.6 kPa. The pore median diameter was a median diameter (d50) of all pores having a pore diameter in a range of 0.005 to 100 μm in a Log derivative pore volume distribution. Here, mercury parameters were as follows: mercury contact angle 130 degrees, mercury surface tension 485 hynes/cm.

<Presence or absence of pore in gravity center section of porous object>

A porous object cross section in a direction perpendicular to the orientation direction of pores (extrusion direction), passing through the gravity center of each EVOH porous object obtained in Production Examples 1 to 5, was produced with a single-edged razor blade, under freezing by liquid nitrogen. The porous object cross section produced was observed with a scanning electron microscope (SEM, SU-70 manufactured by Hitachi High-Tech Corporation), and whether or not such each porous object had a pore in the gravity center section was evaluated.

<Average particle diameter>

The average particle diameter of a measurement specimen (freeze-dried EVOH porous pellet) of 100 g of each ethylene/vinyl alcohol copolymer obtained in Production Examples 1 to 5 described below was measured with "CAMSIZER XT" manufactured by Verder Scientific GmbH & Co. KG. The average particle diameter was defined by a particle diameter (Q3 50.0%) at which a cumulative particle size distribution of an equivalent circle particle diameter calculated by a dynamic image analysis method according to ISO 13322-2 (2006), from the smaller particle diameter, reached 50% (volume basis).

<$\Delta H_{AH}/\Delta H_A$>

The amount of heat of crystal fusion ($\Delta H_A$) was measured with a differential scanning calorimeter (DSC) (TGA/DSC1 Star System manufactured by Mettler Toledo), by heating a sample with a melt-kneaded product of the acetalization product or the composition obtained in each of Examples and Comparative Examples, from 25°C to 140°C at a rate of temperature rise of 10°C/min, then holding the sample at 140°C for 30 minutes, cooling the sample from 140°C to -30°C at a rate of temperature drop of 4°C/min, and then again raising the temperature from -30°C to 200°C at a rate of temperature rise of 10°C/min.

The $\Delta H_{AH}/\Delta H_A$ was calculated under the assumption that the amount of heat of crystal fusion at a higher temperature in peak division of the resulting $\Delta H_A$ at 145°C was $\Delta H_{AH}$. Fig. 2 illustrates the measurement results obtained in Example 1.

<Transparency>

(Haze of resin sheet)

A test piece of 20 mm length × 5 mm width was cut out from the resin sheet obtained in each of Examples and Comparative Examples, and thus the test piece was obtained. The haze of the test piece obtained was measured with a haze meter (SH7000 manufactured by NIPPON DENSHOKU INDUSTRIES Co., Ltd.), according to JIS K7136:2000.

(Haze of laminated glass during slow cooling (haze in slow cooling))

The laminated glass obtained in each of Examples and Comparative Examples was cut to a size of 25 mm × 25 mm, thereby obtaining a test sample. The test sample obtained was heated to 140°C and then slow cooled to 23°C at a rate of 0.1°C/min. The haze of the test sample after slow cooling operation was measured with a haze meter (SH7000 manufactured by NIPPON DENSHOKU INDUSTRIES Co., Ltd.) according to JIS K7136:2000.

<Self-supporting ability under high-temperature environment (storage elastic modulus at 80°C)>

The self-supporting ability under a high-temperature environment of the resin sheet obtained in each of Examples and Comparative Examples was evaluated with the storage elastic modulus at 80°C. A test piece of 20 mm length × 5 mm width was cut out from the resin sheet obtained in each of Examples and Comparative Examples, and the storage elastic modulus (E') was measured with a dynamic viscoelasticity measurement apparatus (manufactured by UBM) under conditions of a measurement temperature of 80°C and a frequency of 1 Hz.

<Creep resistance (relaxation modulus for long time)>

The resin sheet obtained in each of Examples and Comparative Examples was left to still stand under an atmosphere at 23°C and 50% RH for 1 week or more and then cut out to a test piece of 40 mm length × 5 mm width, and the relaxation modulus for a long time was determined from a composite curve (master curve) at a reference temperature of 50°C, obtained from dynamic viscoelasticity measurement and the time-temperature conversion law by use of a dynamic viscoelasticity measurement apparatus manufactured by UBM, and the value thereof was defined as an index of strength of the resin sheet after a lapse of a long time. It is indicated that, as the relaxation modulus for a long time is higher, the strength of the resin sheet after a lapse of a long time is higher.

In the dynamic viscoelasticity measurement, tensile measurement was performed under conditions of a temperature of 50 to 100°C and a frequency of 0.1, 0.5, 1, 5, 10, 50, or 100 Hz, by a method according to JIS K 0129:2005, a master curve at a reference temperature of 50°C was created from the storage elastic modulus measurement results obtained, with the temperature-time conversion law, the storage elastic modulus (E'(t1)) at a frequency of $3.2 \times 10^{-9}$ Hz and the loss elastic modulus (E''(t2)) at a frequency of $1.6 \times 10^{-9}$ Hz were read, the Poisson's ratio was fixed to 0.5, and the relaxation modulus G(t) at 50°C after $3.2 \times 10^{8}$ seconds was determined by the following expression (A).

$$G(t) = E'(t1)/3 - 0.4 \times E''(t2)/3 \ \ldots \ (A)$$

Herein, such a series of calculations were performed with calculation software "RheoStation" (UBM) attached to a dynamic viscoelasticity measurement apparatus manufactured by UBM.

Similarly, tensile measurement was performed under conditions of a temperature of 80 to 140°C and a frequency of 0.1, 0.5, 1, 5, 10, 50, or 100 Hz, by a method according to JIS K 0129:2005, a master curve at a reference temperature of 80°C was created from the storage elastic modulus measurement results obtained, with the temperature-time conversion law, the storage elastic modulus (E'(t1)) at a frequency of $4.0 \times 10^{-7}$ Hz and the loss elastic modulus (E''(t2)) at a frequency of $2.0 \times 10^{-7}$ Hz were read, the Poisson's ratio was fixed to 0.5, and the relaxation modulus at 80°C after $2.6 \times 10^{6}$ seconds was determined by the expression (A).

<Penetration resistance>

The melt-kneaded products of the acetalization products and the compositions, obtained in Examples and Comparative Examples, were each subjected to compression molding at a pressure of 50 kgf/cm$^2$ under heating at 200°C for 5 minutes, and a resin sheet having a thickness of 0.8 mm was obtained. A test piece of 60 mm length × 60 mm width was cut out from the resin sheet, and subjected to a test under conditions of a measurement temperature of 23°C, a load of 2 kg, and an impact rate of 9 m/sec with a dropping weight type impact testing machine ("CEAST9350" manufactured by Instron Corporation) according to ASTM D3763-18, and the penetration energy was calculated from the area of an SS curve from the moment of contact of a striker tip with the test piece (sensing of a test force) until penetration of the striker tip (returning of the test force to zero) during test piece penetration.

<Falling ball test>

An edge of each laminated glass obtained in Examples and Comparative Examples was secured to a support frame and horizontally retained, and a 2.26-kg steel ball was allowed to fall freely from a height of 1.5 m onto the center portion of the laminated glass as a test piece. The test was repeatedly performed 10 times, and evaluation was made according to the following criteria. A case where the result of the falling ball test is A or B indicates that the laminated glass has more excellent penetration resistance. The test was performed with the temperature of the laminated glass being kept at 20°C.

(Evaluation criteria in falling ball test)

A: penetration of the steel ball can be prevented five or more times.
B: penetration of the steel ball can be prevented twice or more and less than five times.
C: penetration of the steel ball can be prevented less than twice.

<Film formability>

An acetalization product and a composition obtained by a method described below were each subjected to film formation with a full-flight single-screw extruder having a diameter of 40 mm and a coathanger die having a width of 60 cm under a condition of a barrel temperature of 200°C, and a resin sheet having a thickness of 0.8 mm and a width of 50 cm was produced. The film formation stability here was observed, evaluated according to the following criteria, and adopted as an index of film formability.

(Evaluation criteria of film formability)

A: continuous film formation is possible without any problems, and a resin sheet having a good appearance is obtained.
B: although one portion of an end of a resin sheet has the problem of fracture, loosing, or the like, continuous film formation is possible and a resin sheet having a relatively good appearance is obtained.
C: a resin sheet has the problem of fracture, loosing, or the like, continuous film formation is impossible, and no resin sheet having a good appearance is obtained.

<Low-temperature adhesiveness (maximum shear stress)>

The maximum shear stress of each laminated glass obtained in Examples and Comparative Examples was measured according to a method described as a compressive shear strength test described in WO 1999/058334. The resulting maximum shear stress was adopted as an evaluation index of low-temperature adhesiveness between glass and a resin sheet. The evaluation criteria are shown below.

A: a maximum shear stress of 25 MPa or more
B: a maximum shear stress of 20 MPa or more and less than 25 MPa
C: a maximum shear stress of less than 20 MPa

Pellet-shaped ethylene/vinyl alcohol copolymers (EVOH 1 to EVOH 5) produced by the following method were used as raw materials in Examples and Comparative Examples.

<Production Example 1>

An EVOH solution comprising 100 parts by mass of EVOH having an ethylene unit content of 44 mol% and a degree of saponification of 99.98 mol%, 60 parts by mass of methanol and 40 parts by mass of water was continuously fed from the top of a plate column having a diameter of 0.3 m and the number of plates of 10, water vapor was blown in from the bottom, and the EVOH solution and water vapor were counter-currently contacted. The temperature in the column was 130°C, and the pressure in the column was 0.3 MPa. Water-containing EVOH obtained by counter-currently contacting water vapor was drained from the bottom of the column. The temperature of the water-containing EVOH obtained was 120°C, and the water content rate was 52.4 mass%. The methanol content rate was 0.02 mass%.
The water-containing EVOH was fed at 42 kg/hr to a twin-screw extruder having a back slit, and extruded with a die having eight pores of 3.0 mm in diameter, attached to the tip of the extruder, under the following conditions. A molten product thereof extruded was cut at a distance of 0.05 mm from the die, with a hot cutter having two blades, thereby obtaining a flat sphere pellet-shaped EVOH porous object. The flow rate of circulating water of the cutter was 300 L/min, and the number of rotations of the cutter was 3000 rpm. Here, the resin temperature (exit) was 95°C, and the water content was 34 mass%.

<Conditions of twin-screw extruder>

L/D: 14
Diameter: 30 mm
Screw: full-flight
Number of rotations: 300 rpm
Cylinder temperature: 90°C
Die temperature: 120°C

The EVOH porous object obtained was washed with water at 50°C until 0.002 mass% or less of sodium acetate in terms of sodium was achieved, and washing water was filtered off, thereby obtaining a porous object (EVOH 1) of a flat sphere pellet-shaped ethylene/vinyl alcohol copolymer.
EVOH 1 obtained was a flat sphere-shaped pellet having an average particle diameter of 3.2 mm. The pellet of EVOH 1 contained a pore having a diameter of 0.003 μm to 100 μm, and had a pore median diameter of 0.07 μm. It was confirmed from the results of observation with an electron microscope that the pellet contained a pore in a gravity center section of the porous object, and contained, in a porous object cross section passing through the gravity center of the porous object, a pore in a region corresponding to 10% or less of a distance L from the gravity center of the cross section, under the assumption that the distance L was the shortest distance in a distance from the gravity center of the cross section to a porous object surface. The pore median diameter, the average particle diameter, and the pore surface area of EVOH 1 obtained are shown in Table 1.

<Production Example 2>

A pellet-shaped porous object (EVOH 2) of an ethylene/vinyl alcohol copolymer was obtained in the same manner as in Production Example 1 except that the ethylene content in Production Example 1 was 32 mol%.
The pellet of EVOH 2 obtained had a flat sphere shape having an average particle diameter of 3.2 mm. The pellet of EVOH 2 contained a pore having a diameter of 0.003 μm to 100 μm, and had a pore median diameter of 0.11 μm. It was confirmed from the results of observation with an electron microscope that the pellet contained a pore in a gravity center section of the porous object, and contained a pore in a region corresponding to 10% or less of the distance L from the gravity center of the porous object cross section.
The pore median diameter, the average particle diameter, and the pore surface area of EVOH 2 obtained are shown in Table 1.

<Production Example 3>

The ethylene/vinyl alcohol copolymer (EVOH 1) obtained in Production Example 1 was charged into a twin-screw extruder, and pelletized at a resin temperature of a discharge port, of 100°C. The amount of EVOH 1 charged per unit time was 10 kg/hr. Specifications of the twin-screw extruder are shown below.

<Conditions of twin-screw extruder>

L/D: 45.5
Diameter: 30 mmΦ
Screw: completely intermeshed in the same direction
Number of rotations: 300 rpm
Die diameter: 3.0 mmΦ
Number of holes in die: 5

The pellet obtained was dried with a flow drier at 100°C for 15 hours, and subsequently dried with a static drier at 100°C for 15 hours, thereby obtaining a pellet-shaped ethylene/vinyl alcohol copolymer (EVOH 3).
The pellet of EVOH 3 obtained was a sphere having an average particle diameter of 2.9 mm, and observed with an electron microscope, and as a result, it was not confirmed that EVOH 3 had a pore. The average particle diameter and the pore surface area of EVOH 3 obtained are shown in Table 1.

<Production Example 4>

A pellet-shaped porous object (EVOH 4) of an ethylene/vinyl alcohol copolymer was obtained in the same manner as in Production Example 1 except that the ethylene content in Production Example 1 was 27 mol%.
The pellet of EVOH 4 obtained had a flat sphere shape having an average particle diameter of 3.2 mm. The pellet of EVOH 4 contained a pore having a diameter of 0.003 μm to 100 μm, and had a pore median diameter of 0.11 μm. It was confirmed from the results of observation with an electron microscope that the pellet contained a pore in a gravity center section of the porous object, and contained a pore in a region corresponding to 10% or less of the distance L from the gravity center of the porous object cross section.
The pore median diameter, the average particle diameter, and the pore surface area of EVOH 4 obtained are shown in Table 1.

<Production Example 5>

A pellet-shaped porous object (EVOH 5) of an ethylene/vinyl alcohol copolymer was obtained in the same manner as in Production Example 1 except that the ethylene content in Production Example 1 was 15 mol%.
The pellet of EVOH 5 obtained had a flat sphere shape having an average particle diameter of 3.2 mm. The pellet of EVOH 5 contained a pore having a diameter of 0.003 μm to 100 μm, and had a pore median diameter of 0.05 μm. It was confirmed from the results of observation with an electron microscope that the pellet contained a pore in a gravity center section of the porous object, and contained a pore in a region corresponding to 10% or less of the distance L from the gravity center of the porous object cross section.

The pore median diameter, the average particle diameter, and the pore surface area of EVOH 5 obtained are shown in Table 1.

<Production Example 6>

A pellet-shaped porous object (EVOH 6) of an ethylene/vinyl alcohol copolymer was obtained in the same manner as in Production Example 1 except that the ethylene content in Production Example 1 was 38 mol%.

The pellet of EVOH 6 obtained had a flat sphere shape having an average particle diameter of 3.2 mm. The pellet of EVOH 6 contained a pore having a diameter of 0.003 μm to 100 μm, and had a pore median diameter of 0.08 μm. It was confirmed from the results of observation with an electron microscope that the pellet contained a pore in a gravity center section of the porous object, and contained a pore in a region corresponding to 10% or less of the distance L from the gravity center of the porous object cross section.

EVOH 6 obtained had a pore surface area of 33 ($m^2/g$).

<Example 1>

(Synthesis of acetalization product of ethylene/vinyl alcohol copolymer)

One hundred parts by mass of the EVOH porous object (EVOH 2) obtained in Production Example 2 was dispersed in 377 parts by mass of water, 20.0 parts by mass of isobutylaldehyde was added, and the resulting dispersion was heated to 60°C under stirring. The stirring was continued for 2 hours, and the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 4 hours. The acetalization product generated by acetalization was in a solid state. Thereafter, 75 parts by mass of 1 M sodium hydroxide was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, thereby washing the acetalization product. The acetalization product was again collected by filtration, and 500 parts by mass of ion-exchange water was added to the acetalization product and stirred at 60°C for 6 hours, thereby performing the second washing of the acetalization product. Washing water was filtered off, and vacuum drying was carried out at 60°C for 8 hours, to obtain 113 parts by mass (yield 100%) of a pellet-shaped acetalization product (A-1) of an ethylene/vinyl alcohol copolymer. The acetalization product obtained of EVOH contained 32 mol% of an ethylene unit and had a degree of acetalization of 29 mol%. The acetalization product obtained of EVOH was a porous object having the pore structure as in EVOH 2 as a raw material.

The acetalization product of EVOH, obtained above, was melt-kneaded with Labo Plastomill ("4M150" manufactured by Toyo Seiki Seisaku-sho, Ltd.) at a chamber temperature of 200°C and the number of rotations of 100 rpm for 3 minutes, and the content of the chamber was taken out and cooled, thereby obtaining a melt-kneaded product.

The melt-kneaded product obtained was compression molded at a pressure of 50 $kgf/cm^2$ (50 MPa) for 5 minutes under heating at 210°C, thereby obtaining a resin sheet having a thickness of 0.8 mm.

The sheet obtained was sandwiched between two float glasses of 2.7 mm thickness and charged to a vacuum laminator (1522N manufactured by Nisshinbo Mechatronics, Inc.), and the interior of the vacuum laminator was depressurized at 100°C for 1 minute. The resultant was pressed at 30 kPa for 5 minutes with the reduced pressure and the temperature being retained, and thus a temporary adhesion body was obtained. The temporary adhesion body obtained was charged to an autoclave, and treated at 140°C and 1.2 MPa for 30 minutes, thereby obtaining a laminated glass.

<Examples 2 to 4>

Pellet-shaped acetalization products (A-2), (A-3) and (A-4) of ethylene/vinyl alcohol copolymers were each obtained by the same method as in Example 1 except that the type of the ethylene/vinyl alcohol copolymer used and the amount of aldehyde added were as shown in Table 1. The acetalization products obtained of ethylene/vinyl alcohol copolymers were each a porous object having the same pore structure as in the ethylene/vinyl alcohol copolymer as a raw material. The acetalization products obtained of ethylene/vinyl alcohol copolymers were used to obtain respective melt-kneaded products, resin sheets and laminated glasses in the same manner as in Example 1.

<Comparative Example 1>

An acetalization product (B-2) of EVOH was obtained by the same method as in Example 1 except that the type of the ethylene/vinyl alcohol copolymer used as a raw material and the amount of aldehyde added were changed as shown in Table 1. The acetalization product obtained of EVOH was used to obtain a melt-kneaded product, a resin sheet and a laminated glass in the same manner as in Example 1.

<Comparative Example 2>

An acetalization product (B-3) of EVOH was obtained by the same method as in Example 1 except that the type of the ethylene/vinyl alcohol copolymer used as a raw material and the amount of aldehyde added were changed as shown in Table 1, and no impregnation with any aldehyde was performed. The acetalization product obtained of EVOH was used to obtain a melt-kneaded product, a resin sheet and a laminated glass in the same manner as in Example 1.

<Comparative Example 3>

One hundred parts by mass of the EVOH porous object (EVOH 1) obtained in Production Example 1 was dispersed in a mixed solvent of 500 parts by mass of methanol and 50 parts by mass of ion-exchange water, 40 parts by mass of 1 M hydrochloric acid was then added, the temperature of the resulting dispersion was raised to 60°C under stirring, and a chip was completely dissolved. Thereafter, 16.7 parts by mass of isobutylaldehyde was added and dispersed in the state of a homogeneous ethylene/vinyl alcohol copolymer solution, and thereafter acetalization reaction was performed at 60°C kept. After retention for 3 hours from the start of the reaction, 6.4 parts by mass of sodium carbonate was added for stopping the reaction, and a reaction liquid including a modified vinyl acetal resin was obtained.

After 500 parts by mass of methanol was added to the reaction liquid subjected to neutralization, the resultant was dropped to 2000 parts by mass of ion-exchange water, to precipitate a resin. After the resin precipitated was subjected to filtration, the resin was dispersed in ion-exchange water and stirred and washed with water at 23°C for 15 minutes, and then subjected to filtration. This operation of washing with water and filtration was repeated additionally twice. This washing operation from precipitation to washing with water and filtration was defined as one set. Thereafter, the resin was dissolved in 1000 parts by mass of methanol, and one set of the washing operation was again performed. Thereafter, a resin composition was obtained by vacuum drying performed at 60°C for 8 hours. A modified vinyl acetal resin (B-1) was obtained in which the modified vinyl acetal resin included in the resin composition obtained contained 44 mol% of an ethylene unit and had a degree of acetalization of 30 mol%.

The acetalization product obtained of an ethylene/vinyl alcohol copolymer was used to obtain a melt-kneaded product, a resin sheet and a laminated glass in the same manner as in Example 1.

<Comparative Example 4>

An acetalization product (B-4) of EVOH was obtained by the same method as in Example 1 except that the type of the ethylene/vinyl alcohol copolymer used as a raw material and the amount of aldehyde added were changed as shown in Table 1. The acetalization product obtained of EVOH was used to obtain a melt-kneaded product, a resin sheet and a laminated glass in the same manner as in Example 1.

<Comparative Example 5>

An acetalization product (B-5) of EVOH was obtained by the same method as in Example 1 except that the type of the ethylene/vinyl alcohol copolymer used as a raw material, the amount of aldehyde added and the reaction time were changed as shown in Table 1, and no impregnation with any aldehyde was performed. The acetalization product obtained of EVOH was used to obtain a melt-kneaded product, a resin sheet and a laminated glass in the same manner as in Example 1.

Various physical properties of the acetalization products, the resin sheets and the laminated glasses obtained in Examples 1 to 3 and Comparative Examples 1 to 5 were evaluated according to the above methods. The results are shown in Table 1.

[Table 1]

| | | Examples | | | | Comparative Examples | | | | |
|---|---|---|---|---|---|---|---|---|---|---|
| | | 1 | 2 | 3 | 4 | 1 | 2 | 3 | 4 | 5 |
| Ethylene/vinyl alcohol copolymer (EVOH) | | EVOH 2 | EVOH 1 | EVOH 4 | EVOH 1 | EVOH 3 | EVOH 1 | EVOH 1 | EVOH 5 | EVOH 4 |
| | Ethylene unit (mol%) | 32 | 44 | 27 | 44 | 44 | 44 | 44 | 15 | 27 |
| | Vinyl alcohol unit (mol%) | 68 | 56 | 73 | 56 | 56 | 56 | 56 | 85 | 73 |
| | Pore median diameter (μm) | 0.11 | 0.07 | 0.11 | 0.07 | - | 0.07 | 0.07 | 0.05 | 0.11 |
| | Pore surface area ($m^2/g$) | 36 | 33 | 32 | 33 | 18 | 33 | 33 | 35 | 32 |
| | Average particle diameter (mm) | 3.2 | 3.2 | 3.2 | 3.2 | 2.9 | 3.2 | 3.2 | 3.2 | 3.2 |
| | 190°C, 2.16 kg MFR (g/10min) | 1.6 | 5.5 | 8.0* | 5.5 | 5.5 | 5.5 | 5.5 | 1.5 | 8.0* |
| Reaction conditions | Raw material resin (parts by mass) | 100 | 100 | 100 | 100 | 100 | 100 | 100 | 100 | 100 |
| | 1 M hydrochloric acid (parts by mass) first time | 10 | 10 | 10 | 10 | 10 | 10 | 40 | 10 | 40 |
| | 1 M hydrochloric acid (parts by mass) second time | 40 | 40 | 40 | 40 | 40 | 40 | - | 40 | - |
| | Isobutylaldehyde (parts by mass) | 20.0 | 16.7 | 16.5 | 233 | 16.7 | 16.7 | 16.7 | 25.3 | 33 |
| | Aldehyde impregnation conditions | 60°C/2h | 60°C/2h | 60°C/2h | 60°C/2h | 60°C/2h | - | - | 60°C/2h | - |
| | 1 M NaOH (parts by mass) | 75 | 75 | 75 | 75 | 75 | 75 | 60 | 75 | 60 |
| | Reaction time (h) | 4 | 4 | 4 | 4 | 4 | 4 | 1 | 4 | 0.5 |
| Acetalization product of EVOH | | (A-1) | (A-2) | (A-3) | (A-4) | (B-2) | (B-3) | (B-1) | (B-4) | (B-5) |
| | Degree of acetalization (mol%/PVA unit) | 29 | 30 | 22 | 42 | 30 | 30 | 30 | 30 | 22 |
| | Ethylene unit (mol%) | 32 | 44 | 27 | 44 | 44 | 44 | 44 | 15 | 27 |
| | Vinyl alcohol unit (mol%) | 48 | 39 | 57 | 32 | 39 | 39 | 39 | 60 | 57 |
| | Symmetry factor (JIS K0124) | 0.80 | 0.81 | 0.79 | 0.78 | 1.10 | 1.05 | 0.78 | 0.92 | 0.70 |
| | Tg (°C) (JIS K7121:2012) | 47 | 45 | 50 | 42 | 47 | 46 | 47 | 42 | 51 |
| | Tm (°C) (JIS K7121:2012) | 144 | 140 | 146 | 132 | 143 | 139 | 106 | 155 | 154 |
| | Tm/Tg (K/K) | 1.30 | 1.28 | 1.30 | 1.28 | 1.30 | 1.29 | 1.19 | 1.36 | 1.32 |

(continued)

| | | | (A-1) | (A-2) | (A-3) | (A-4) | (B-2) | (B-3) | (B-1) | (B-4) | (B-5) |
|---|---|---|---|---|---|---|---|---|---|---|---|
| Evaluation results | Resin sheet | Tms (°C) (JIS K7121:2012) | 144 | 140 | 146 | 132 | 143 | 139 | 106 | 155 | 154 |
| | | $\Delta H_{AH}$ / $\Delta H_A$ | 0.13 | 0.13 | 0.30 | 0.04 | 0.15 | 0.14 | 0.03 | 0.35 | 0.29 |
| | | Haze (%) | 0.5 | 0.3 | 0.7 | 0.3 | 2.7 | 20 | 0.8 | 2.5 | 2.8 |
| | | Storage elastic modulus (MPa) @80°C | 17.2 | 16.4 | 21.5 | 10.5 | 20.2 | 19.1 | 4.8 | 32 | 19.2 |
| | | Relaxation modulus (MPa) @50°C $3.2 \times 10^8$sec | 2.0 | 1.8 | 3.0 | 1.5 | 2.9 | 2.8 | 0.2 | 3.1 | 2.8 |
| | | Penetration energy (J) | 14 | 15 | 11 | 16 | 14 | 13 | 18 | 9 | 8 |
| | | Film formability | A | A | A | A | A | A | A | B | A |
| | Laminated glass | Haze after slow cooling (%) | 0.6 | 0.4 | 0.9 | 0.4 | 5.2 | 32 | 1.1 | 4.2 | 5.5 |
| | | Maximum shear stress ($N/mm^2$) | A | A | A | A | A | A | B | A | A |

* Measured under conditions of 210°C and a load of 2160 g

<Example 5>

A composition obtained by mixing 100 parts by mass of the acetalization product (A-1) of an ethylene/vinyl alcohol copolymer and 0.02 parts by mass of a phenol-based antioxidant ("Irganox1010" manufactured by BASF Japan Ltd.) was melt-kneaded with Labo Plastomill at a chamber temperature of 200°C and the number of rotations of 100 rpm for 3 minutes, and the content of the chamber was taken out and cooled, thereby obtaining a melt-kneaded product.
The melt-kneaded product obtained was used to obtain a resin sheet and a laminated glass in the same manner as in Example 1.

<Examples 6 and 7>

Melt-kneaded products, resin sheets and laminated glasses of compositions were obtained in the same manner as in Example 5 except that the acetalization product of an ethylene/vinyl alcohol copolymer, each used, was changed as shown in Table 2.

<Example 8>

A composition obtained by mixing 80 parts by mass of the acetalization product (A-2) of an ethylene/vinyl alcohol copolymer and 20 parts by mass of the acetalization product (B-1) of an ethylene/vinyl alcohol copolymer was melt-kneaded with Labo Plastomill at a chamber temperature of 200°C and the number of rotations of 100 rpm for 3 minutes, and the content of the chamber was taken out and cooled, thereby obtaining a melt-kneaded product.
The melt-kneaded product obtained was used to obtain a resin sheet and a laminated glass in the same manner as in Example 1.

<Example 9>

One hundred parts by mass of the acetalization product (A-4) of an ethylene/vinyl alcohol copolymer and 10 parts by mass of di-(2-butoxyethyl)-adipic acid ester (DBEA) were melt-kneaded with Labo Plastomill at a chamber temperature of 200°C and the number of rotations of 100 rpm for 3 minutes, and the content of the chamber was taken out and cooled, thereby obtaining a melt-kneaded product.
The melt-kneaded product obtained was used to obtain a resin sheet and a laminated glass in the same manner as in Example 1.

<Example 10>

One hundred parts by mass of the acetalization product (A-2) of an ethylene/vinyl alcohol copolymer and 22 parts by mass of polypropylene glycol (average molecular weight 400: "SANNIX PP-400" manufactured by Sanyo Chemical Industries, Ltd.) were melt-kneaded with Labo Plastomill at a chamber temperature of 200°C and the number of rotations of 100 rpm for 3 minutes, and the content of the chamber was taken out and cooled, thereby obtaining a melt-kneaded product.
The melt-kneaded product obtained was used to obtain a resin sheet and a laminated glass in the same manner as in Example 1.

<Example 11>

(Synthesis of acetalization product of ethylene/vinyl alcohol copolymer)

One hundred parts by mass of the EVOH porous object (EVOH 4) obtained in Production Example 4 was dispersed in 377 parts by mass of water, 9.0 parts by mass of isobutylaldehyde was added, and the resulting dispersion was heated to 60°C under stirring. The stirring was continued for 2 hours, and the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 4 hours. The acetalization product generated by acetalization was in a solid state. Thereafter, 75 parts by mass of 1 M sodium hydroxide was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, thereby washing the acetalization product. The acetalization product was again collected by filtration, and 500 parts by mass of ion-exchange water was added to the acetalization product and stirred at 60°C for 6 hours, thereby performing the second washing of the acetalization product. Washing water was filtered off, and vacuum drying was carried out at 60°C for 8 hours, thereby obtaining 103 parts by mass (yield 100%) of a pellet-shaped acetalization product (A-5) of an ethylene/vinyl alcohol copolymer. The acetalization product obtained of EVOH contained 27 mol% of an ethylene unit and 68.6 mol% of a vinyl alcohol unit, and had a degree of acetalization of 12 mol%. The acetalization product obtained of EVOH was a porous object having the pore structure as in EVOH 4 as a raw material.

The acetalization product (A-5) obtained of an ethylene/vinyl alcohol copolymer had a symmetry factor of 0.79, a Tg of 55°C, a Tm of 151°C, and a Tm/Tg (K/K) of 1.29.

A composition obtained by mixing 100 parts by mass of the acetalization product (A-5) obtained of an ethylene/vinyl alcohol copolymer and 0.02 parts by mass of an antioxidant ("Irganox1010" manufactured by BASF Japan Ltd.) was melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet and a laminated glass in the same manner as in Example 1.

<Example 12>

One hundred parts by mass of the acetalization product (A-5) of an ethylene/vinyl alcohol copolymer and 20 parts by mass of polypropylene glycol (average molecular weight 400: "SANNIX PP-400" manufactured by Sanyo Chemical Industries, Ltd.) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet and a laminated glass in the same manner as in Example 1.

<Example 13>

One hundred parts by mass of the EVOH porous object (EVOH 4) obtained in Production Example 4 was dispersed in 377 parts by mass of water, 23.3 parts by mass of isobutylaldehyde was added, and the resulting dispersion was heated to 60°C under stirring. The stirring was continued for 2 hours, and the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 4 hours. The acetalization product generated by acetalization was in a solid state. Thereafter, 75 parts by mass of 1 M sodium hydroxide was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, thereby washing the acetalization product. The acetalization product was again collected by filtration, and 500 parts by mass of ion-exchange water was added to the acetalization product and stirred at 60°C for 6 hours, thereby performing the second washing of the acetalization product. Washing water was filtered off, and vacuum drying was carried out at 60°C for 8 hours, thereby obtaining 117 parts by mass (yield 100%) of a pellet-shaped acetalization product (A-6) of an ethylene/vinyl alcohol copolymer. The acetalization product obtained of EVOH contained 27 mol% of an ethylene unit and 56.9 mol% of a vinyl alcohol unit, and had a degree of acetalization of 22 mol%. The acetalization product obtained of EVOH was a porous object having the pore structure as in EVOH 4 as a raw material.

The acetalization product (A-6) obtained of an ethylene/vinyl alcohol copolymer had a degree of acetalization of 22 mol%, a symmetry factor of 0.79, a Tg of 50°C, a Tm of 146°C, and a Tm/Tg (K/K) of 1.30.

A composition obtained by mixing 90 parts by mass of the acetalization product (A-6) obtained of an ethylene/vinyl alcohol copolymer and 10 parts by mass of the ethylene/vinyl alcohol copolymer (EVOH 2) obtained in Production Example 2 was melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet and a laminated glass in the same manner as in Example 1.

<Comparative Examples 6 to 10>

Melt-kneaded products, resin sheets and laminated glasses of compositions were obtained in the same manner as in Example 5 except that the acetalization product of an ethylene/vinyl alcohol copolymer, each used, was changed as shown in Table 4.

Various physical properties of the compositions, the resin sheets and the laminated glasses obtained in Examples 5 to 13 and Comparative Examples 6 to 10 were evaluated according to the above methods. The results are shown in Table 2 to Table 4.

[Table 2]

| | | | Examples | | | | | |
|---|---|---|---|---|---|---|---|---|
| | | | 5 | 6 | 7 | 8 | 9 | 10 |
| Composition | | Acetalization product (A-1) (parts by mass) | 100 | - | - | - | - | - |
| | | Acetalization product (A-2) (parts by mass) | - | | - | 80 | | 100 |
| | | Acetalization product (A-3) (parts by mass) | - | - | 100 | - | - | - |
| | | Acetalization product (A-4) (parts by mass) | - | 100 | - | - | 100 | - |
| | | Acetalization product (A-5) (parts by mass) | - | - | - | - | - | - |
| | | Acetalization product (A-6) (parts by mass) | - | - | - | - | - | - |
| | | Acetalization product (B-1) (parts by mass) | - | - | - | 20 | - | - |
| | | Acetalization product (B-2) (parts by mass) | - | - | - | - | - | - |
| | | Acetalization product (B-3) (parts by mass) | - | - | - | - | - | - |
| | | Acetalization product (B-4) (parts by mass) | - | - | - | - | - | - |
| | | Acetalization product (B-5) (parts by mass) | - | - | - | - | - | - |
| | | Acetalization product (B-6) (parts by mass) | - | - | - | - | - | - |
| | | Ethylene/vinyl alcohol copolymer (EVOH 2) (parts by mass) | - | - | - | - | - | - |
| | | Antioxidant Irganox1010 (parts by mass) | 0.02 | 0.02 | 0.02 | - | - | - |
| | | Plasticizer DBEA (parts by mass) | - | - | - | - | 10 | - |
| | | Plasticizer PPG#400 (parts by mass) | - | - | - | - | - | 22 |
| Evaluation results | Resin sheet | Tms (°C) (JIS K7121:2012) | 144 | 132 | 146 | 130 | 130 | 138 |
| | | $\Delta H_{AH}/\Delta H_A$ | 0.13 | 0.04 | 0.30 | 0.06 | 0.03 | 0.12 |
| | | Haze (%) | 0.5 | 0.3 | 0.7 | 0.3 | 0.3 | 0.4 |
| | | Storage elastic modulus (MPa) @ 80°C | 17.2 | 10.1 | 21.5 | 13.4 | 9.3 | 10.2 |
| | | Relaxation modulus (MPa) @ 50°C, $3.2 \times 10^8$ sec | 2.0 | 1.5 | 3.0 | 1.6 | 1.4 | 1.6 |
| | | Penetration energy (J) | 14 | 16 | 11 | 18 | 19 | 19 |
| | | Film formability | A | A | A | A | A | A |

(continued)

| | | | Examples | | | | | |
|---|---|---|---|---|---|---|---|---|
| | | | 5 | 6 | 7 | 8 | 9 | 10 |
| | Laminated glass | Haze after slow cooling (%) | 0.6 | 0.4 | 0.9 | 0.4 | 0.4 | 0.5 |
| | | Maximum shear stress ($N/mm^2$) | A | A | A | A | A | A |

[Table 3]

| | | | Examples | | |
|---|---|---|---|---|---|
| | | | 11 | 12 | 13 |
| Composition | | Acetalization product (A-1) (parts by mass) | - | - | - |
| | | Acetalization product (A-2) (parts by mass) | - | - | - |
| | | Acetalization product (A-3) (parts by mass) | - | - | - |
| | | Acetalization product (A-4) (parts by mass) | - | - | - |
| | | Acetalization product (A-5) (parts by mass) | 100 | 100 | - |
| | | Acetalization product (A-6) (parts by mass) | - | - | 90 |
| | | Acetalization product (B-1) (parts by mass) | - | - | - |
| | | Acetalization product (B-2) (parts by mass) | - | - | - |
| | | Acetalization product (B-3) (parts by mass) | - | - | - |
| | | Acetalization product (B-4) (parts by mass) | - | - | - |
| | | Acetalization product (B-5) (parts by mass) | - | - | - |
| | | Acetalization product (B-6) (parts by mass) | - | - | - |
| | | Ethylene/vinyl alcohol copolymer (EVOH 2) (parts by mass) | - | - | 10 |
| | | Antioxidant Irganox1010 (parts by mass) | 0.02 | - | - |
| | | Plasticizer DBEA (parts by mass) | - | - | - |
| | | Plasticizer PPG#400 (parts by mass) | - | 20 | - |
| Evaluation results | Resin sheet | Tms (°C) (JIS K7121:2012) | 151 | 150 | 148 |
| | | $\Delta H_{AH} / \Delta_{HA}$ | 0.32 | 0.31 | 0.31 |
| | | Haze (%) | 2.2 | 2.2 | 2.5 |
| | | Storage elastic modulus (MPa) @ 80°C | 32 | 18.8 | 30.0 |
| | | Relaxation modulus (MPa) @ 50°C, $3.2 \times 10^8$ sec | 3.0 | 1.4 | 2.2 |
| | | Relaxation modulus (MPa) @ 80°C, $2.6 \times 10^6$ sec | 4.3 | 2.8 | 4.8 |
| | | Penetration energy (J) | 12 | 18 | 11 |
| | | Film formability | A | B | B |
| | Laminated glass | Haze after slow cooling (%) | 2.7 | 3.7 | 3.9 |
| | | Maximum shear stress ($N/mm^2$) | A | A | A |

[Table 4]

| | | Comparative Examples | | | | |
|---|---|---|---|---|---|---|
| | | 6 | 7 | 8 | 9 | 10 |
| | Acetalization product (A-1 (parts by mass) | - | - | - | - | - |
| | Acetalization product (A-2) (parts by mass) | - | - | - | - | - |
| | Acetalization product (A-3) (parts by mass) | - | - | - | - | - |

(continued)

| | | | Comparative Examples | | | | |
|---|---|---|---|---|---|---|---|
| | | | 6 | 7 | 8 | 9 | 10 |
| Composition | | Acetalization product (A-4) (parts by mass) | - | - | - | - | - |
| | | Acetalization product (A-5) (parts by mass) | - | - | - | - | - |
| | | Acetalization product (A-6) (parts by mass) | - | - | - | - | - |
| | | Acetalization product (B-1) (parts by mass) | - | - | 100 | - | - |
| | | Acetalization product (B-2) (parts by mass) | 100 | - | - | - | - |
| | | Acetalization product (B-3) (parts by mass) | - | 100 | - | - | - |
| | | Acetalization product (B-4) (parts by mass) | - | - | - | 100 | - |
| | | Acetalization product (B-5) (parts by mass) | - | - | - | - | 100 |
| | | Acetalization product (B-6) (parts by mass) | - | - | - | - | - |
| | | Ethylene/vinyl alcohol copolymer (EVOH 2) (parts by mass) | - | - | - | - | - |
| | | Antioxidant Irganox1010 (parts by mass) | 0.02 | 0.02 | 0.02 | 0.02 | 0.02 |
| | | Plasticizer DBEA (parts by mass) | - | - | - | - | - |
| | | Plasticizer PPG#400 (parts by mass) | - | - | - | - | - |
| Evaluation results | Resin sheet | Tms (°C) (JIS K7121:2012) | 143 | 139 | 106 | 155 | 154 |
| | | $T_{mA}$ (°C) | 133 | 132 | 108 | 155 | 151 |
| | | $\Delta H_{AH} / \Delta H_A$ | 0.15 | 0.14 | 0.03 | 0.35 | 0.29 |
| | | Haze (%) | 4.5 | 22 | 0.7 | 3.8 | 4.8 |
| | | Storage elastic modulus (MPa)@80°C | 20.2 | 19.1 | 4.8 | 32 | 19.2 |
| | | Relaxation modulus (MPa) @ 50°C, $3.2 \times 10^8$ sec | 2.9 | 2.8 | 0.2 | 3.1 | 2.8 |
| | | Penetration energy (J) | 14 | 13 | 18 | 9 | 8 |
| | | Film formability | A | A | A | C | A |
| | Laminated glass | Haze after slow cooling (%) | 5.2 | 32 | 1.1 | 4.2 | 5.5 |
| | | Maximum shear stress ($N/mm^2$) | A | A | B | A | A |

<Examples 14 to 17>

Pellet-shaped acetalization products (A-1') to (A-4') of ethylene/vinyl alcohol copolymers were each obtained by the same method as in Example 1 except that reaction conditions were respectively changed as shown in Table 4. The acetalization products obtained of ethylene/vinyl alcohol copolymers were each a porous object having the same pore structure as in the ethylene/vinyl alcohol copolymer as a raw material. The acetalization products obtained of ethylene/vinyl alcohol copolymers were used to obtain respective melt-kneaded products, resin sheets and laminated glasses in the same manner as in Example 1.

<Comparative Example 11>

An acetalization product (B-2') of EVOH was obtained by the same method as in Comparative Example 1 except that reaction conditions were changed as shown in Table 4. The acetalization product obtained of EVOH was used to obtain a melt-kneaded product, a resin sheet and a laminated glass in the same manner as in Example 1.

<Comparative Example 12>

An acetalization product (B-1') of EVOH was obtained by the same method as in Comparative Example 3 except that reaction conditions were changed as shown in Table 4. The acetalization product obtained of EVOH was used to obtain a melt-kneaded product, a resin sheet and a laminated glass in the same manner as in Example 1.

<Comparative Example 13>

An acetalization product (B-4') of EVOH was obtained by the same method as in Comparative Example 4 except that reaction conditions were changed as shown in Table 4. The acetalization product obtained of EVOH was used to obtain a melt-kneaded product, a resin sheet and a laminated glass in the same manner as in Example 1.

<Comparative Example 14>

An acetalization product (B-5') of EVOH was obtained by the same method as in Comparative Example 5 except that reaction conditions were changed as shown in Table 4. The acetalization product obtained of EVOH was used to obtain a melt-kneaded product, a resin sheet and a laminated glass in the same manner as in Example 1.

Various physical properties of the acetalization products, the resin sheets and the laminated glasses obtained in Examples 14 to 17 and Comparative Examples 11 to 14 were evaluated according to the above methods. The results are shown in Table 5.

[Table 5]

| | | Examples | | | | Comparative Examples | | | |
|---|---|---|---|---|---|---|---|---|---|
| | | 14 | 15 | 16 | 17 | 11 | 12 | 13 | 14 |
| Ethylene/vinyl alcohol co-polymer (EVOH) | | EVOH 2 | EVOH 1 | EVOH 4 | EVOH 1 | EVOH 3 | EVOH 1 | EVOH 5 | EVOH4 |
| | Ethylene unit (mol%) | 32 | 44 | 27 | 44 | 44 | 44 | 15 | 27 |
| | Vinyl alcohol unit (mol%) | 68 | 56 | 73 | 56 | 56 | 56 | 85 | 73 |
| | Pore median diameter (μm) | 0.11 | 0.07 | 0.11 | 0.07 | - | 0.07 | 0.05 | 0.11 |
| | Pore surface area ($m^2/g$) | 36 | 33 | 32 | 33 | 18 | 33 | 25 | 32 |
| | Average particle diameter (mm) | 3.2 | 3.2 | 3.2 | 3.2 | 2.9 | 3.2 | 3.2 | 3.2 |
| | 190°C, 2.16 kg MFR (g/10min) | 1.6 | 5.5 | 8.0* | 5.5 | 5.5 | 5.5 | 1.5 | 8.0* |
| Reaction conditions | Raw material resin (parts by mass) | 100 | 100 | 100 | 100 | 100 | 100 | 100 | 100 |
| | 1 M hydrochloric acid (parts by mass) first time | 10 | 10 | 10 | 10 | 10 | 40 | 10 | 40 |
| | 1 M hydrochloric acid (parts by mass) second time | 40 | 40 | 40 | 40 | 40 | - | 40 | - |
| | Isobutylaldehyde (parts by mass) | 20.0 | 16.7 | 23.3 | 23.3 | 16.7 | 16.7 | 25.3 | 33 |
| | Aldehyde impregnation conditions | 60°C/2h | 60°C/2h | 60°C/2h | 60°C/2h | 60°C/2h | - | 60°C/2h | 60°C/2h |
| | 1 M NaOH (parts by mass) | 75 | 75 | 75 | 75 | 75 | 60 | 75 | 75 |
| | Reaction time (h) | 8 | 8 | 8 | 8 | 8 | 2 | 8 | 8 |
| Acetalization product of EVOH | | (A-1') | (A-2') | (A-3') | (A-4') | (B-2') | (B-1') | (B-4') | *(B-5')* |
| | Degree of acetalization (mol%/PVA unit) | 29 | 30 | 30 | 42 | 30 | 30 | 30 | 2 |
| | Ethylene unit (mol%) | 32 | 44 | 27 | 44 | 44 | 44 | 15 | 27 |
| | Vinyl alcohol unit (mol%) | 48 | 39 | 57 | 32 | 39 | 39 | 60 | 71 |
| | Symmetry factor (JIS K0124) | 0.80 | 0.81 | 0.79 | 0.78 | 1.10 | 0.78 | 0.92 | 0.70 |
| | Tg (°C) (JIS K7121:2012) | 55 | 45 | 55 | 42 | 47 | 47 | 55 | 59 |
| | Tm (°C) (JIS K7121:2012) | 158 | 140 | 168 | 132 | 143 | 106 | 172 | 180 |
| | Tm/Tg (K/K) | 1.31 | 1.30 | 1.34 | 1.28 | 1.30 | 1.19 | 1.36 | 1.36 |
| | Meso/Racemo ratio | 2.9 | 2.1 | 3.5 | 1.4 | 1.1 | 20.9 | 5.5 | 8.0 |
| | SP value ($(cal/cm^3)^{1/2}$) | 12.4 | 11.7 | 12.6 | 11.2 | 11.7 | 11.7 | 13.3 | 13.9 |

(continued)

| | | | (A-1') | (A-2') | (A-3') | (A-4') | (B-2') | (B-1') | (B-4') | *(B-5')* |
|---|---|---|---|---|---|---|---|---|---|---|
| Evaluation results | Resin sheet | Tms (°C) (JIS K7121:2012) | 158 | 140 | 168 | 132 | 143 | 106 | 172 | 180 |
| | | $\Delta H_{AH} / \Delta H_A$ | 0.13 | 0.13 | 0.30 | 0.04 | 0.15 | 0.03 | 0.35 | 0.29 |
| | | Haze (%) | 0.5 | 0.3 | 0.7 | 0.3 | 2.7 | 0.8 | 2.5 | 5.1 |
| | | Storage elastic modulus (MPa) @80°C | 17.2 | 16.4 | 21.5 | 10.5 | 20.2 | 4.8 | 32 | 19.2 |
| | | Relaxation modulus (MPa) @ 50°C $3.2 \times 10^8$sec | 2.0 | 1.8 | 3.0 | 1.5 | 2.9 | 0.2 | 3.1 | 2.8 |
| | | Penetration energy (J) | 14 | 15 | 11 | 16 | 14 | 18 | 9 | 8 |
| | | Film formability | A | A | A | A | A | A | B | B |
| | Laminated glass | Haze after slow cooling (%) | 0.6 | 0.4 | 0.9 | 0.4 | 5.2 | 1.1 | 4.2 | 8.5 |
| | | Maximnm shear stress ($N/mm^2$) | A | A | A | A | A | B | A | A |

* Measured under conditions of 210°C and a load of 2160 g

<Examples 18 to 26>

Melt-kneaded products, resin sheets and laminated glasses of compositions were obtained in the same manner as in Examples 5 to 13 except that the acetalization product of an ethylene/vinyl alcohol copolymer, each used, was changed as shown in Tables 6 and 7.

<Comparative Examples 15 to 18>

Melt-kneaded products, resin sheets and laminated glasses of compositions were obtained in the same manner as in Comparative Example 6 and Comparative Examples 8 to 10 except that the acetalization product of an ethylene/vinyl alcohol copolymer, each used, was changed as shown in Table 8.

Various physical properties of the compositions, the resin sheets and the laminated glasses obtained in Examples 18 to 26 and Comparative Examples 15 to 18 were evaluated according to the above methods. The results are shown in Tables 6 to 8.

[Table 6]

| | | Examples | | | | | |
|---|---|---|---|---|---|---|---|
| | | 18 | 19 | 20 | 21 | 22 | 23 |
| Composition | Acetalization product (A-1') (parts by mass) | 100 | - | - | - | - | - |
| | Acetalization product (A-2') (parts by mass) | - | - | - | 80 | - | 100 |
| | Acetalization product (A-3') (parts by mass) | - | - | 100 | - | - | - |
| | Acetalization product (A-4') (parts by mass) | - | 100 | - | - | 100 | - |
| | Acetalization product (A-5') (parts by mass) | - | - | - | - | - | - |
| | Acetalization product (A-6') (parts by mass) | - | - | - | - | - | - |
| | Acetalization product (A-7) (parts by mass) | - | - | - | - | - | - |
| | Acetalization product (A-8) (parts by mass) | - | - | - | - | - | - |
| | Acetalization product (A-9) (parts by mass) | - | - | - | - | - | - |
| | Acetalization product (B-1') (parts by mass) | - | - | - | 20 | - | - |
| | Acetalization product (B-2') (parts by mass) | - | - | - | - | - | - |
| | Acetalization product (B-3) (parts by mass) | - | - | - | - | - | - |
| | Acetalization product (B-4') (parts by mass) | - | - | - | - | - | - |
| | Acetalization product (B-5') (parts by mass) | - | - | - | - | - | - |
| | Acetalization product (B-6') (parts by mass) | - | - | - | - | - | - |
| | Ethylene/vinyl alcohol copolymer (EVOH 2) (parts by mass) | - | - | - | - | - | - |
| | Antioxidant Irganox1010 (parts by mass) | 0.02 | 0.02 | 0.02 | - | - | - |
| | Plasticizer DBEA (parts by mass) | - | - | - | - | 10 | - |
| | Plasticizer PPG#400 (parts by mass) | - | - | - | - | - | 22 |

(continued)

| | | | Examples | | | | | |
|---|---|---|---|---|---|---|---|---|
| | | | 18 | 19 | 20 | 21 | 22 | 23 |
| Evaluation results | Resin sheet | Tms (°C) (JIS K7121:2012) | 158 | 132 | 168 | 130 | 130 | 138 |
| | | $\Delta H_{AH} / \Delta H_A$ | 0.13 | 0.04 | 0.30 | 0.06 | 0.03 | 0.12 |
| | | Haze (%) | 0.5 | 0.3 | 0.7 | 0.3 | 0.3 | 0.4 |
| | | Storage elastic modulus (MPa) @80°C | 17.2 | 10.1 | 21.5 | 13.4 | 9.3 | 10.2 |
| | | Relaxation modulus (MPa) @ 50°C $3.2 \times 10^8$sec | 2.0 | 1.5 | 3.0 | 1.6 | 1.4 | 1.6 |
| | | Penetration energy (J) | 14 | 16 | 11 | 18 | 19 | 19 |
| | | Film formability | A | A | A | A | A | A |
| | Laminated glass | Haze after slow cooling (%) | 0.6 | 0.4 | 0.9 | 0.4 | 0.4 | 0.5 |
| | | Maximum shear stress ($N/mm^2$) | A | A | A | A | A | A |

[Table 7]

| | | Examples | | |
|---|---|---|---|---|
| | | 24 | 25 | 26 |
| Composition | Acetalization product (A-1') (parts by mass) | - | - | - |
| | Acetalization product (A-2') (parts by mass) | - | - | - |
| | Acetalization product (A-3') (parts by mass) | - | - | - |
| | Acetalization product (A-4') (parts by mass) | - | - | - |
| | Acetalization product (A-5') (parts by mass) | 100 | 100 | - |
| | Acetalization product (A-6') (parts by mass) | - | - | 90 |
| | Acetalization product (A-7) (parts by mass) | - | - | - |
| | Acetalization product (A-8) (parts by mass) | - | - | - |
| | Acetalization product (A-9) (parts by mass) | - | - | - |
| | Acetalization product (B-1') (parts by mass) | - | - | - |
| | Acetalization product (B-2') (parts by mass) | - | - | - |
| | Acetalization product (B-3) (parts by mass) | - | - | - |
| | Acetalization product (B-4') (parts by mass) | - | - | - |
| | Acetalization product (B-5') (parts by mass) | - | - | - |
| | Acetalization product (B-6') (parts by mass) | - | - | - |
| | Ethylene/vinyl alcohol copolymer (EVOH 2) (parts by mass) | - | - | 10 |
| | Antioxidant Irganox1010 (parts by mass) | 0.02 | - | - |
| | Plasticizer DBEA (parts by mass) | - | - | - |
| | Plasticizer PPG#400 (parts by mass) | - | 20 | - |

(continued)

| | | | Examples | | |
|---|---|---|---|---|---|
| | | | 24 | 25 | 26 |
| Evaluation results | Resin sheet | Tms (°C) (JIS K7121:2012) | 175 | 174 | 173 |
| | | $\Delta H_{AH}$ /$\Delta H_A$ | 0.32 | 0.31 | 0.31 |
| | | Haze (%) | 2.2 | 2.2 | 2.5 |
| | | Storage elastic modulus (MPa) @ 80°C | 32 | 18.8 | 30.0 |
| | | Relaxation modulus (MPa) @ 50°C 3.2 × $10^8$ sec | 3.0 | 1.4 | 2.2 |
| | | Relaxation modulus (MPa) @ 80°C 2.6 × $10^6$ sec | 4.3 | 2.8 | 4.8 |
| | | Penetration energy (J) | 12 | 18 | 11 |
| | | Film formability | A | B | B |
| | Laminated glass | Haze after slow cooling (%) | 2.7 | 3.7 | 3.9 |
| | | Maximum shear stress ($N/mm^2$) | A | A | A |

[Table 8]

| | | Comparative Examples | | | |
|---|---|---|---|---|---|
| | | 15 | 16 | 17 | 18 |
| Composition | Acetalization product (A-1') (parts by mass) | - | - | - | - |
| | Acetalization product (A-2') (parts by mass) | - | - | - | - |
| | Acetalization product (A-3') (parts by mass) | - | - | - | - |
| | Acetalization product (A-4') (parts by mass) | - | - | - | - |
| | Acetalization product (A-5') (parts by mass) | - | - | - | - |
| | Acetalization product (A-6') (parts by mass) | | | | |
| | Acetalization product (A-7) (parts by mass) | - | - | - | - |
| | Acetalization product (A-8) (parts by mass) | - | - | - | - |
| | Acetalization product (A-9) (parts by mass) | - | - | - | - |
| | Acetalization product (B-1') (parts by mass) | - | 100 | - | - |
| | Acetalization product (B-2') (parts by mass) | 100 | - | - | - |
| | Acetalization product (B-3) (parts by mass) | - | - | - | - |
| | Acetalization product (B-4') (parts by mass) | - | - | 100 | - |
| | Acetalization product (B-5') (parts by mass) | - | - | - | 100 |
| | Acetalization product (B-6') (parts by mass) | - | - | - | - |
| | Ethylene/vinyl alcohol copolymer (EVOH 2) (parts by mass) | - | - | - | - |
| | Antioxidant Irganox1010 (parts by mass) | 0.02 | 0.02 | 0.02 | 0.02 |
| | Plasticizer DBEA (parts by mass) | - | - | - | - |
| | Plasticizer PPG#400 (parts bv mass) | - | - | - | - |

(continued)

| | | | Comparative Examples | | | |
|---|---|---|---|---|---|---|
| | | | 15 | 16 | 17 | 18 |
| Evaluation results | Resin sheet | Tms (°C) (JIS K7121:2012) | 143 | 106 | 172 | 180 |
| | | $T_{mA}$ (°C) | 133 | 108 | 171 | 176 |
| | | $\Delta H_{AH}/\Delta H_A$ | 0.15 | 0.03 | 0.35 | 0.29 |
| | | Haze (%) | 4.5 | 0.7 | 3.8 | 4.8 |
| | | Storage elastic modulus (MPa)@80°C | 20.2 | 4.8 | 32 | 19.2 |
| | | Relaxation modulus (MPa) @50°C $3.2 \times 10^8$sec | 2.9 | 0.2 | 3.1 | 2.8 |
| | | Penetration energy (J) | 14 | 18 | 9 | 8 |
| | | Film formability | A | A | C | A |
| | Laminated glass | Haze after slow cooling (%) | 5.2 | 1.1 | 4.2 | 5.5 |
| | | Maximum shear stress ($N/mm^2$) | A | B | A | A |

<Example 27>

(Synthesis of acetalization product of ethylene/vinyl alcohol copolymer)

One hundred parts by mass of the EVOH porous object (EVOH 1) obtained in Production Example 1was dispersed in 377 parts by mass of water, 19.5 parts by mass of isobutylaldehyde was added, and the resulting dispersion was heated to 60°C under stirring. The stirring was continued for 2 hours, and the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 6 hours. The acetalization product generated by acetalization was in a solid state. Thereafter, 75 parts by mass of 1 M sodium hydroxide was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, thereby washing the acetalization product. The acetalization product was again collected by filtration, and 500 parts by mass of ion-exchange water was added to the acetalization product and stirred at 60°C for 6 hours, thereby performing the second washing of the acetalization product. Washing water was filtered off, and vacuum drying was carried out at 60°C for 8 hours, thereby obtaining 103 parts by mass (yield 100%) of a pellet-shaped acetalization product (A-7) of an ethylene/vinyl alcohol copolymer. The acetalization product obtained of EVOH contained 44 mol% of an ethylene unit and 36.4 mol% of a vinyl alcohol unit, and had a degree of acetalization of 35 mol%. The acetalization product obtained of EVOH was a porous object having the pore structure as in EVOH 1 as a raw material.

The acetalization product (A-7) obtained of an ethylene/vinyl alcohol copolymer had a symmetry factor of 0.82, a Tg of 44°C, a Tm of 140°C, a Tm/Tg (K/K) of 1.30, an SP value of 11.5 $(cal/cm^3)^{1/2}$, and a meso/racemo ratio of 2.2.

One hundred parts by mass of the acetalization product (A-7) obtained of an ethylene/vinyl alcohol copolymer and 11.5 parts by mass of bis(2-butoxyethyl)adipate (manufactured by Tokyo Chemical Industry Co., Ltd.: DBEA, SP value 9.3 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then no bleedout was observed even after the still standing for 1 week. The resin sheet was used to obtain a laminated glass in the same manner as in Example 1.

<Example 28>

One hundred parts by mass of the acetalization product (A-2') of an ethylene/vinyl alcohol copolymer, obtained in Example 15, 4.0 parts by mass of bis(2-butoxyethyl)adipate (manufactured by Tokyo Chemical Industry Co., Ltd.: DBEA) and 10.0 parts by mass of polypropylene glycol (average molecular weight 400: "SANNIX PP-400" manufactured by Sanyo Chemical Industries, Ltd., SP value 10.4 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then no bleedout was observed even after the still standing for 1 week. The resin sheet was used to obtain a laminated glass in the same manner as in Example 1.

<Example 29>

A composition obtained by mixing 100 parts by mass of the acetalization product (A-7) of an ethylene/vinyl alcohol copolymer, obtained in Example 27, 17.5 parts by mass of monopropylene glycol dibenzoate (manufactured by DIC Corporation: PB-10, SP value: 10.9 $(cal/cm^3)^{1/2}$) and 0.02 parts by mass of a phenol-based antioxidant ("Irganox1010" manufactured by BASF Japan Ltd.) was melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then no bleedout was observed even after the still standing for 1 week. The resin sheet was used to obtain a laminated glass in the same manner as in Example 1.

<Example 30>

One hundred parts by mass of the acetalization product (A-2') of an ethylene/vinyl alcohol copolymer, obtained in Example 15, and 17.5 parts by mass of polypropylene glycol (average molecular weight 400: "SANNIX PP-400" manufactured by Sanyo Chemical Industries, Ltd., SP value 10.4 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then no bleedout was observed even after the still standing for 1 week. The resin sheet was used to obtain a laminated glass in the same manner as in Example 1.

<Example 31>

(Synthesis of acetalization product of ethylene/vinyl alcohol copolymer)

One hundred parts by mass of the EVOH porous object (EVOH 6) obtained in Production Example 6 was dispersed in 377 parts by mass of water, 18.5 parts by mass of isobutylaldehyde was added, and the resulting dispersion was heated to 60°C under stirring. The stirring was continued for 2 hours, and the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 6 hours. The acetalization product generated by acetalization was in a solid state. Thereafter, 75 parts by mass of an aqueous 1 M sodium hydroxide solution was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, thereby washing the acetalization product. The acetalization product was again collected by filtration, and 500 parts by mass of ion-exchange water was added to the acetalization product and stirred at 60°C for 6 hours, thereby performing the second washing of the acetalization product. Washing water was filtered off, and vacuum drying was carried out at 60°C for 8 hours, thereby obtaining 103 parts by mass (yield 100%) of a pellet-shaped acetalization product (A-8) of an ethylene/vinyl alcohol copolymer. The acetalization product obtained of EVOH contained 38 mol% of an ethylene unit and 43.4 mol% of a vinyl alcohol unit, and had a degree of acetalization of 30 mol%. The acetalization product obtained of EVOH was a porous object having the pore structure as in EVOH 6 as a raw material.

The acetalization product (A-8) obtained of an ethylene/vinyl alcohol copolymer had a symmetry factor of 0.90, a Tg of 50°C, a Tm of 149°C, a Tm/Tg (K/K) of 1.31, an SP value of 12.0 $(cal/cm^3)^{1/2}$, and a meso/racemo ratio of 2.1.

One hundred parts by mass of the acetalization product (A-8) obtained of an ethylene/vinyl alcohol copolymer and 22.5 parts by mass of polypropylene glycol (average molecular weight 400: "SANNIX PP-400" manufactured by Sanyo Chemical Industries, Ltd., SP value 10.4 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then no bleedout was observed even after the still standing for 1 week. The resin sheet was used to obtain a laminated glass in the same manner as in Example 1.

<Example 32>

(Synthesis of acetalization product of ethylene/vinyl alcohol copolymer)

One hundred parts by mass of the EVOH porous object (EVOH 6) obtained in Production Example 6 was dispersed in 377 parts by mass of water, 21.6 parts by mass of isobutylaldehyde was added, and the resulting dispersion was heated to 60°C under stirring. The stirring was continued for 2 hours, and the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 4 hours. The acetalization product generated by acetalization was in a solid state. Thereafter, 75 parts by mass of 1 M sodium hydroxide was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, thereby washing the acetalization product. The acetalization product was again collected by filtration, and 500 parts by mass of ion-exchange water was added to the acetalization product and stirred at 60°C for 6 hours, thereby performing the second washing of the acetalization product. Washing water was filtered off, and vacuum drying was carried out at 60°C for 8 hours, thereby obtaining 103 parts by mass (yield 100%) of a pellet-shaped acetalization product (A-9) of an ethylene/vinyl alcohol copolymer. The acetalization product obtained of EVOH contained 38 mol% of an ethylene unit and 40.3 mol% of a vinyl alcohol unit, and had a degree of acetalization of 35 mol%. The acetalization product obtained of EVOH was a porous object having the pore structure as in EVOH 6 as a raw material.

The acetalization product (A-9) obtained of an ethylene/vinyl alcohol copolymer had a symmetry factor of 0.91, a Tg of 47°C, a Tm of 146°C, a Tm/Tg (K/K) of 1.31, an SP value of 12.0 $(cal/cm^3)^{1/2}$, and a meso/racemo ratio of 3.9.

One hundred parts by mass of the acetalization product (A-9) obtained of an ethylene/vinyl alcohol copolymer and 17.5 parts by mass of polypropylene glycol (average molecular weight 400: "SANNIX PP-400" manufactured by Sanyo Chemical Industries, Ltd., SP value 10.4 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then no bleedout was observed even after the still standing for 1 week. The resin sheet was used to obtain a laminated glass in the same manner as in Example 1.

<Example 33>

One hundred parts by mass of the acetalization product (A-2') of an ethylene/vinyl alcohol copolymer, obtained in Example 15, and 7.5 parts by mass triethylene glycol di-2-ethylhexoate ("3G8", SP value: 9.1 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then bleedout was observed after the still standing for 3 days. The resin sheet was used to obtain a laminated glass in the same manner as in Example 1.

<Example 34>

One hundred parts by mass of the acetalization product (A-2') of an ethylene/vinyl alcohol copolymer, obtained in Example 15, and 10.0 parts by mass of glycerin mono-12-hydroxystearate (GMS-12) ("HC-12" manufactured by RIKEN VITAMIN CO., LTD., SP value: 12.1 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then bleedout was observed after the still standing for 3 days. The resin sheet was used to obtain a laminated glass in the same manner as in Example 1.

<Comparative Example 19>

One hundred parts by mass of the acetalization product (B-1') of an ethylene/vinyl alcohol copolymer obtained in Comparative Example 12 and 4.0 parts by mass of bis(2-butoxyethyl)adipate (manufactured by Tokyo Chemical Industry Co., Ltd.: DBEA) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then bleedout was observed after the still standing for 3 days. The resin sheet was used to obtain a laminated glass in the same manner as in Example 1.

<Comparative Example 20>

One hundred parts by mass of the acetalization product (B-1') of an ethylene/vinyl alcohol copolymer, obtained in Comparative Example 12, 11.5 parts by mass of polypropylene glycol (average molecular weight 400: "SANNIX PP-400" manufactured by Sanyo Chemical Industries, Ltd. (SP value 10.4) and 0.02 parts by mass of a phenol-based antioxidant ("Irganox1010" manufactured by BASF Japan Ltd.) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then no bleedout was observed even after the still standing for 7 days. The resin sheet was used to obtain a laminated glass in the same manner as in Example 1.

<Comparative Example 21>

One hundred parts by mass of the acetalization product (B-4') of an ethylene/vinyl alcohol copolymer, obtained in Comparative Example 13, and 10.0 parts by mass of polypropylene glycol (average molecular weight 400: "SANNIX PP-400" manufactured by Sanyo Chemical Industries, Ltd., SP value 10.4 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. Since bleedout of the plasticizer immediately after production of the resin sheet was confirmed, analysis of the resin sheet and production of a laminated glass were not carried out.

<Comparative Example 22>

(Synthesis of acetalization product of ethylene/vinyl alcohol copolymer)

One hundred parts by mass of the EVOH porous object (EVOH 6) obtained in Production Example 6 was dispersed in 377 parts by mass of water, 1.6 parts by mass of isobutylaldehyde was added, and the resulting dispersion was heated to 60°C under stirring. The stirring was continued for 2 hours, and the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 6 hours. The acetalization product generated by acetalization was in a solid state. Thereafter, 75 parts by mass of 1 M sodium hydroxide was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, thereby washing the acetalization product. The acetalization product was again collected by filtration, and 500 parts by mass of ion-exchange water was added to the acetalization product and stirred at 60°C for 6 hours, thereby performing the second washing of the acetalization product. Washing water was filtered off, and vacuum drying was carried out at 60°C for 8 hours, thereby obtaining 103 parts by mass (yield 100%) of a pellet-shaped acetalization product (B-6) of an ethylene/vinyl alcohol copolymer. The acetalization product obtained of EVOH contained 38 mol% of an ethylene unit and 60.3 mol% of a vinyl alcohol unit, and had a degree of acetalization of 2.6 mol%. The acetalization product obtained of EVOH was a porous object having the pore structure as in EVOH 6 as a raw material.

The acetalization product (B-6) obtained of an ethylene/vinyl alcohol copolymer had a symmetry factor of 0.78, a Tg of 54°C, a Tm of 167°C, a Tm/Tg (K/K) of 1.35, and an SP value of 13.1, and the meso/racemo ratio could not be calculated because of low peak intensity.

One hundred parts by mass of the acetalization product (B-6) obtained of an ethylene/vinyl alcohol copolymer and 10.0 parts by mass of polypropylene glycol (average molecular weight 400: "SANNIX PP-400" manufactured by Sanyo Chemical Industries, Ltd., SP value 10.4 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. Since bleedout of the plasticizer immediately after production of the resin sheet was confirmed, analysis of the resin sheet and production of a laminated glass were not carried out.

<Comparative Example 23>

(Synthesis of acetalization product of ethylene/vinyl alcohol copolymer)

One hundred parts by mass of the EVOH porous object (EVOH 1) obtained in Production Example 1 was dispersed in 377 parts by mass of water, 33.0 parts by mass of isobutylaldehyde was added, and the resulting dispersion was heated to 60°C under stirring. The stirring was continued for 2 hours, and the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 6 hours. The acetalization product generated by acetalization was in a solid state. Thereafter, 75 parts by mass of 1 M sodium hydroxide was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, thereby washing the acetalization product. The acetalization product was again collected by filtration, and 500 parts by mass of ion-exchange water was added to the acetalization product and stirred at 60°C for 6 hours, thereby performing the second washing of the acetalization product. Washing water was filtered off, and vacuum drying was carried out at 60°C for 8 hours, thereby obtaining 103 parts by mass (yield 100%) of a pellet-shaped acetalization product (B-7) of an ethylene/vinyl alcohol copolymer. The acetalization product obtained of EVOH contained 44 mol% of an ethylene unit and 24.4 mol% of a vinyl alcohol unit, and had a degree of acetalization of 56 mol%. The acetalization product obtained of EVOH was a porous object having the pore structure as in EVOH 1 as a raw material.

The acetalization product (B-7) obtained of an ethylene/vinyl alcohol copolymer had a symmetry factor of 0.89, a Tg of 42°C, a Tm of 125°C, a Tm/Tg (K/K) of 1.26, an SP value of 10.7, and a meso/racemo ratio of 6.7.

One hundred parts by mass of the acetalization product (B-7) obtained of an ethylene/vinyl alcohol copolymer and 10.0 parts by mass of polypropylene glycol (average molecular weight 400: "SANNIX PP-400" manufactured by Sanyo Chemical Industries, Ltd., SP value 10.4 $(cal/cm^3)^{1/2}$) were melt-kneaded with Labo Plastomill at a chamber temperature of 200°C and the number of rotations of 100 rpm for 3 minutes, and the content of the chamber was taken out and cooled, thereby obtaining a melt-kneaded product.

The melt-kneaded product obtained was used to obtain a resin sheet in the same manner as in Example 1. The resin sheet was left to still stand in a constant-temperature and constant-humidity tank at 23°C and 50% RH for 1 week and bleedout of the plasticizer was checked, and then no bleedout was observed even after the still standing for 7 days. The resin sheet was used to obtain a laminated glass in the same manner as in Example 1.

Various physical properties of the compositions, the resin sheets and the laminated glasses obtained in Examples 27 to 34 and Comparative Examples 19 to 23 were evaluated according to the above methods. The results are shown in Tables 9 to 10.

[Table 9]

| | | Examples | | | | | | | |
|---|---|---|---|---|---|---|---|---|---|
| | | 27 | 28 | 29 | 30 | 31 | 32 | 33 | 34 |
| Composition | Acetalization product (A-1') (parts by mass) | - | - | - | - | - | - | - | - |
| | Acetalization product (A-2') (parts by mass) | - | 100 | - | 100 | - | - | 100 | 100 |
| | Acetalization product (A-7) (parts by mass) | 100 | - | 100 | - | - | - | - | - |
| | Acetalization product (A-8) (parts by mass) | - | - | | - | 100 | - | - | - |
| | Acetalization product (A-9) (parts by mass) | - | - | - | - | - | 100 | - | - |
| | Acetalization product (B-1') (parts by mass) | - | - | - | - | - | - | - | - |
| | Acetalization product (B-2') (parts by mass) | - | - | - | - | - | - | - | - |
| | Acetalization product (B-3) (parts by mass) | - | - | - | - | - | - | - | - |
| | Acetalization product (B-4') (parts by mass) | - | - | - | - | - | - | - | - |
| | Acetalization product (B-5') (parts by mass) | - | - | - | - | - | - | - | - |
| | Acetalization product (B-6) (parts by mass) | - | - | - | - | - | - | - | - |
| | Ethylene/vinyl alcohol copolymer (EVOH2) (parts by mass) | - | - | - | - | - | - | - | - |
| | Antioxidant Irganox1010 (parts by mass) | - | - | 0.02 | - | - | - | - | - |
| | Plasticizer DBEA (parts by mass) | 11.5 | 4.0 | - | - | - | - | - | - |
| | Plasticizer PPG#400 (parts by mass) | - | 10.0 | - | 17.5 | 22.5 | 17.5 | - | - |
| | Plasticizer PB-10 (parts by mass) | - | - | 17.5 | - | - | - | - | - |

(continued)

| | | | Examples | | | | | | | |
|---|---|---|---|---|---|---|---|---|---|---|
| | | | 27 | 28 | 29 | 30 | 31 | 32 | 33 | 34 |
| | | Plasticizer 3G8 (parts by mass) | - | - | - | - | - | - | 7.5 | - |
| | | Plasticizer GMS-12 (parts by mass) | - | - | - | - | - | - | - | 10 |
| Evaluation results | Resin sheet | bleedout | A | A | A | A | A | A | B | B |
| | | Tms (°C) (JIS K7121:2012) | 139 | 140 | 139 | 140 | 148 | 148 | - | - |
| | | Haze (%) | 0.3 | 0.6 | 0.4 | 0.7 | 0.7 | 0.8 | 0.9 | 0.8 |
| | | Storage elastic modulus (MPa) @80°C | 9.6 | 15.2 | 9.2 | 13.0 | 13.2 | 9.3 | 15.8 | 16.2 |
| | | Relaxation modulus (MPa) @50°C $3.2 \times 10^8$sec | 1.5 | 1.8 | 1.6 | 1.6 | 1.2 | 1.5 | 1.9 | 1.8 |
| | | Penetration energy (J) | 18 | 15 | 16 | 15 | 16 | 17 | - | 15 |
| | | Film formability | A | A | A | A | A | A | - | A |
| | Laminated glass | Haze after slow cooling (%) | 0.4 | 0.6 | 0.5 | 0.7 | 0.7 | 0.8 | 1.0 | 1.1 |
| | | Maximum shear stress ($N/mm^2$) | A | A | A | A | A | A | A | A |
| | | Falling ball test (1.5 m) | A | A | A | A | A | A | B | B |

[Table 10]

| | | Comparative Examples | | | | |
|---|---|---|---|---|---|---|
| | | 19 | 20 | 21 | 22 | 23 |
| | Acetalization product (A-1') (parts by mass) | - | - | - | - | - |
| | Acetalization product (A-2') (parts by mass) | - | - | - | - | - |
| | Acetalization product (A-7) (parts by mass) | - | - | - | - | - |
| | Acetalization product (A-8) (parts by mass) | - | - | - | - | - |
| | Acetalization product (A-9) (parts by mass) | - | - | - | - | - |

(continued)

| | | Comparative Examples | | | | |
|---|---|---|---|---|---|---|
| | | 19 | 20 | 21 | 22 | 23 |
| Composition | Acetalization product (B-1') (parts by mass) | 100 | 100 | - | - | - |
| | Acetalization product (B-2') (parts by mass) | - | - | - | - | - |
| | Acetalization product (B-3) (parts by mass) | - | - | - | - | - |
| | Acetalization product (B-4') (parts by mass) | - | - | 100 | - | - |
| | Acetalization product (B-5') (parts by mass) | - | - | - | - | - |
| | Acetalization product (B-6) (parts by mass) | - | - | - | 100 | - |
| | Acetalization product (B-7) (parts by mass) | - | - | - | - | 100 |
| | Antioxidant Irganox1010 (parts by mass) | - | 0.02 | - | - | - |
| | Plasticizer DBEA (parts by mass) | 4.0 | - | - | - | - |
| | Plasticizer PPG#400(parts by mass) | - | 11.5 | 10.0 | 10.0 | 10.0 |
| | Plasticizer PB-10(parts by mass) | - | - | - | - | - |
| | Plasticizer 3G8(parts by mass) | - | - | - | - | - |
| | Plasticizer GMS-12(parts by mass) | - | - | - | - | - |

(continued)

| | | | Comparative Examples | | | | |
|---|---|---|---|---|---|---|---|
| | | | 19 | 20 | 21 | 22 | 23 |
| Evaluation results | Resin sheet | Bleedout | B | A | C | C | A |
| | | Tms (°C) (JIS K7121:2012) | 106 | 105 | - | - | 125 |
| | | Haze (%) | 0.9 | 0.5 | - | - | 0.5 |
| | | Storage elastic modulus (MPa) @80°C | 4.6 | 3.8 | - | - | 7.2 |
| | | Relaxation modulus (MPa) @50°C $3.2 \times 10^8$sec | 0.2 | 0.2 | - | - | 0.4 |
| | | Penetration energy (J) | 16 | 16 | - | - | 15 |
| | | Film formability | A | A | - | - | A |
| | Laminated glass | Haze after slow cooling (%) | 1.1 | 0.5 | - | - | 0.5 |
| | | Maximum shear stress ($N/mm^2$) | A | A | - | - | B |
| | | Falling ball test (1.5 m) | C | B | - | - | A |

As shown in Tables 1 to 10, the resin sheets obtained in Examples were confirmed to be more excellent in transparency, penetration resistance, and self-supporting ability and creep resistance under a high-temperature environment than those in Comparative Examples. In particular, those in Examples 1 to 10, 14 to 23 each exhibited a haze in slow cooling of 2% or less, had a very high transparency, and furthermore were also favorable in film formability.

Accordingly, the acetalization product of an ethylene/vinyl alcohol copolymer and the composition of the present invention can allow for formation of a resin sheet excellent in transparency, penetration resistance, and self-supporting ability and creep resistance under a high-temperature environment.

Furthermore, as shown in Table 9, the resin sheets obtained in Examples 27 to 32, in which the plasticizer having a specified SP value was used, were excellent in bleedout resistance and exhibited favorable results in the falling ball test, and furthermore the laminated glasses in the Examples were confirmed to be more excellent on penetration resistance.

## Claims

**1.** An acetalization product of an ethylene/vinyl alcohol copolymer, comprising:

20 to 80 mol% of an ethylene unit; and
4 to 76 mol% of a vinyl alcohol unit
based on a total monomer unit constituting the acetalization product, wherein
a degree of acetalization is 5 to 80 mol%, and
expression (1):

$$0.75 \leq W_{0.05h}/2f \leq 1.00 \quad (1)$$

wherein $W_{0.05h}/2f$ represents a symmetry factor determined by reversed-phase partition gradient high-performance liquid chromatography analysis with a water-ethanol eluent, according to JIS K 0124:2011, and expression (2):

$$1.27 \leq Tm/Tg \leq 1.35 \quad (2)$$

wherein Tm and Tg respectively represent a melting peak temperature (kelvin) and an intermediate glass transition temperature (kelvin) measured according to JIS K7121:2012,
are satisfied.

**2.** An acetalization product of an ethylene/vinyl alcohol copolymer, comprising:

20 to 80 mol% of an ethylene unit; and
4 to 76 mol% of a vinyl alcohol unit
based on a total monomer unit constituting the acetalization product, wherein
a degree of acetalization is 5 to 80 mol%,
expression (1):

$$0.75 \leq W_{0.05h}/2f \leq 1.00 \ (1)$$

wherein $W_{0.05h}/2f$ represents a symmetry factor determined by reversed-phase partition gradient high-performance liquid chromatography analysis with a water-ethanol eluent, according to JIS K 0124:2011,
is satisfied, and
a meso/racemo ratio in an acetal ring structure is less than 5.

**3.** The acetalization product according to claim 1, wherein a meso/racemo ratio in an acetal ring structure is less than 5.

**4.** The acetalization product according to any of claims 1 to 3, wherein an SP value is 12.6 $(cal/cm^3)^{1/2}$ or less.

**5.** The acetalization product according to any of claims 1 to 4, wherein a degree of acetalization is 5 to 62 mol%.

**6.** A composition comprising

the acetalization product (A) according to any of claims 1 to 5, and
at least one component selected from the group consisting of a resin (B) other than the acetalization product (A), a plasticizer, an antioxidant and an ultraviolet absorber, wherein
a content of the acetalization product (A) is 70 mass% or more.

**7.** The composition according to claim 6, wherein a melting peak temperature Tms measured by according to JIS K7121:2012 is 120°C to 180°C.

**8.** The composition according to claim 6 or 7, wherein a content of the plasticizer is 40 parts by mass or less based on 100 parts by mass of the acetalization product (A).

**9.** The composition according to any of claims 6 to 8, wherein a content of the plasticizer is 10 to 40 parts by mass based on 100 parts by mass of the acetalization product (A).

**10.** The composition according to any of claims 6 to 9, wherein an SP value of the plasticizer is 9.2 to 12.0 $(cal/cm^3)^{1/2}$.

**11.** The composition according to claims 6 to 10, wherein the resin (B) is an ethylene/vinyl alcohol copolymer, and/or an acetalization product (B) of an ethylene/vinyl alcohol copolymer, satisfying the following expression (3):

$$Tm/Tg < 1.27 \ (3)$$

wherein Tm and Tg respectively represent a melting peak temperature (kelvin) and an intermediate glass transition temperature (kelvin) measured according to JIS K7121:2012.

**12.** The composition according to claims 6 to 11, wherein the following expression (4):

$$\Delta H_{AH}/\Delta H_A \leq 0.30 \ (4)$$

wherein $\Delta H_A$ represents an amount of heat of crystal fusion, measured with a differential scanning calorimeter (DSC), by temperature rise from 25°C to 140°C at a rate of temperature rise of 10°C/min, retention at 140°C for 30 minutes, then temperature drop from 140°C to -30°C at a rate of temperature drop of 4°C/min, and again temperature rise from -30°C to 200°C at a rate of temperature rise of 10°C/min, and $\Delta H_{AH}$ represents an amount of heat of crystal fusion at a higher temperature in peak division at 145°C of the $\Delta H_A$;
is satisfied.

**13.** A method for producing the acetalization product according to any of claims 1 to 5, the method comprising:

(i) a step of preparing a dispersion comprising an ethylene/vinyl alcohol copolymer, an aldehyde and a solvent, and impregnating the ethylene/vinyl alcohol copolymer with at least one portion of the aldehyde; and
(ii) a step of adding a catalyst to the dispersion and acetalizing the ethylene/vinyl alcohol copolymer, after step (i), wherein

the ethylene/vinyl alcohol copolymer is a porous object, and
the acetalization is performed by solid-liquid reaction.

**14.** A resin sheet comprising one or more layers containing the acetalization product according to any of claims 1 to 5 or the composition according to any of claims 6 to 12.

**15.** A laminated glass interlayer, comprising the resin sheet according to claim 14.

**16.** A laminated glass comprising:

two glass plates; and
the laminated glass interlayer according to claim 15, disposed between the two glass plates.

**Patentansprüche**

**1.** Acetalisierungsprodukt eines Ethylen/Vinylalkohol-Copolymers, umfassend:

20 bis 80 Mol-% einer Ethyleneinheit; und
4 bis 76 Mol-% einer Vinylalkoholeinheit
bezogen auf eine Gesamtmonomereinheit, aus denen das Acetalisierungsprodukt besteht, wobei
ein Acetalisierungsgrad 5 bis 80 Mol-% beträgt, und
ein Ausdruck (1):

$$0{,}75 \leq W_{0{,}05h}/2f \leq 1{,}00 \quad (1)$$

wobei $W_{0,05h}/2f$ einen Symmetriefaktor darstellt, der durch Umkehrphasen-Verteilungsgradienten-Hochleistungsflüssigkeitschromatographie mit einem Wasser-Ethanol-Elutionsmittel gemäß JIS K 0124:2011 bestimmt wird, und
ein Ausdruck (2):

$$1{,}27 \leq Tm/Tg \leq 1{,}35 \quad (2)$$

wobei Tm und Tg jeweils eine Schmelzpeaktemperatur (Kelvin) und eine mittlere Glasübergangstemperatur (Kelvin) darstellen, die gemäß JIS K7121:2012 gemessen werden,
erfüllt sind.

**2.** Acetalisierungsprodukt eines Ethylen/Vinylalkohol-Copolymers, umfassend:

20 bis 80 Mol-% einer Ethyleneinheit; und
4 bis 76 Mol-% einer Vinylalkoholeinheit
bezogen auf eine Gesamtmonomereinheit, aus denen das Acetalisierungsprodukt besteht, wobei
ein Acetalisierungsgrad 5 bis 80 Mol-% beträgt,
ein Ausdruck (1):

$$0{,}75 \leq W_{0{,}05h}/2f \leq 1{,}00 \quad (1)$$

wobei $W_{0,05h}/2f$ einen Symmetriefaktor darstellt, der durch Umkehrphasen-Verteilungsgradienten-Hochleistungsflüssigkeitschromatographie mit einem Wasser-Ethanol-Elutionsmittel gemäß JIS K 0124:2011 bestimmt wird,

erfüllt ist, und
ein Meso/Racemo-Verhältnis in einer Acetalringstruktur weniger als 5 beträgt.

**3.** Acetalisierungsprodukt nach Anspruch 1, wobei ein Meso/Racemo-Verhältnis in einer Acetalringstruktur weniger als 5 beträgt.

**4.** Acetalisierungsprodukt nach einem der Ansprüche 1 bis 3, wobei ein SP-Wert 12,6 $(cal/cm^3)^{1/2}$ oder weniger beträgt.

**5.** Acetalisierungsprodukt nach einem der Ansprüche 1 bis 4, wobei ein Acetalisierungsgrad 5 bis 62 Mol-% beträgt.

**6.** Zusammensetzung, umfassend das Acetalisierungsprodukt (A) nach einem der Ansprüche 1 bis 5 und mindestens eine Komponente, ausgewählt aus der Gruppe bestehend aus einem anderen Harz (B) als dem Acetalisierungsprodukt (A), einem Weichmacher, einem Antioxidationsmittel und einem UV-Absorber, wobei ein Gehalt des Acetalisierungsprodukts (A) 70 Massen-% oder mehr beträgt.

**7.** Zusammensetzung nach Anspruch 6, wobei eine Schmelzpeaktemperatur Tms, die gemäß JIS K7121:2012 gemessen wird, 120°C bis 180°C beträgt.

**8.** Zusammensetzung nach Anspruch 6 oder 7, wobei ein Gehalt des Weichmachers 40 Massenteile oder weniger, bezogen auf 100 Massenteile des Acetalisierungsprodukts (A), beträgt.

**9.** Zusammensetzung nach einem der Ansprüche 6 bis 8, wobei ein Gehalt des Weichmachers 10 bis 40 Massenteile, bezogen auf 100 Massenteile des Acetalisierungsprodukts (A), beträgt.

**10.** Zusammensetzung nach einem der Ansprüche 6 bis 9, wobei ein SP-Wert des Weichmachers 9,2 bis 12,0 $(cal/cm^3)^{1/2}$ beträgt.

**11.** Zusammensetzung nach einem der Ansprüche 6 bis 10, wobei das Harz (B) ein Ethylen/Vinylalkohol-Copolymer und/oder ein Acetalisierungsprodukt (B) eines Ethylen/Vinylalkohol-Copolymers ist, das den folgenden Ausdruck (3) erfüllt:

$$Tm/Tg < 1{,}27 \quad (3)$$

wobei Tm und Tg jeweils eine Schmelzpeaktemperatur (Kelvin) und eine mittlere Glasübergangstemperatur (Kelvin) darstellen, die gemäß JIS K7121:2012 gemessen werden.

**12.** Zusammensetzung nach den Ansprüchen 6 bis 11, wobei der folgende Ausdruck (4):

$$\Delta H_{AH}/\Delta H_A \leq 0{,}30 \quad (4)$$

wobei $\Delta H_A$ eine Kristallschmelzwärme darstellt, die mit einem Differential-Scanning-Kalorimeter (DSC) durch Temperaturanstieg von 25°C auf 140°C mit einer Temperaturanstiegsgeschwindigkeit von 10°C/min, Halten bei 140°C für 30 Minuten, anschließend Temperaturabfall von 140°C auf -30°C mit einer Temperaturabfallgeschwindigkeit von 4°C/min und einem erneuten Temperaturanstieg von -30°C auf 200°C mit einer Temperaturanstiegsgeschwindigkeit von 10°C/min gemessen wird, und $\Delta H_{AH}$ eine Kristallschmelzwärme bei einer höheren Temperatur in der Peakauftrennung bei 145°C von $\Delta H_A$ darstellt;
erfüllt ist.

**13.** Verfahren zur Herstellung des Acetalisierungsprodukts nach einem der Ansprüche 1 bis 5, das Verfahren umfassend:

(i) einen Schritt des Herstellens einer Dispersion, umfassend ein Ethylen/Vinylalkohol-Copolymer, einen Aldehyd und ein Lösungsmittel, und des Imprägnierens des Ethylen/Vinylalkohol-Copolymers mit mindestens einem Teil des Aldehyds; und
(ii) einen Schritt des Hinzufügens eines Katalysators zu der Dispersion und des Acetalisierens des Ethylen/Vinylalkohol-Copolymers nach Schritt (i), wobei das Ethylen/Vinylalkohol-Copolymer ein poröser Gegenstand ist und die Acetalisierung durch eine Fest-Flüssig-Reaktion durchgeführt wird.

**14.** Harzfolie, umfassend eine oder mehrere Schichten, enthaltend das Acetalisierungsprodukt nach einem der Ansprüche 1 bis 5 oder die Zusammensetzung nach einem der Ansprüche 6 bis 12.

**15.** Verbundglas-Zwischenschicht, umfassend die Harzfolie nach Anspruch 14.

**16.** Verbundglas, umfassend:

zwei Glasplatten; und
die Verbundglas-Zwischenschicht nach Anspruch 15, die zwischen den beiden Glasplatten angeordnet ist.

**Revendications**

**1.** Produit d'acétalisation d'un copolymère d'éthylène/alcool vinylique, comprenant :

20 à 80 % en mol d'une unité d'éthylène ; et
4 à 76 % en mol d'une unité d'alcool vinylique
basés sur une unité monomère totale constituant le produit d'acétalisation, dans lequel
un degré d'acétalisation est de 5 à 80 % en mol, et
l'expression (1) :

$$0{,}75 \leq W_{0.05h}/2f \leq 1{,}00 \qquad (1)$$

dans laquelle $W_{0.05h}/2f$ représente un facteur de symétrie déterminé par analyse de chromatographie liquide haute performance par gradient de partage en phase inverse avec un éluent d'eau-éthanol, conformément à JIS K 0124 : 2011, et l'expression (2) :

$$1{,}27 \leq Tm/Tg \leq 1{,}35 \qquad (2)$$

dans laquelle Tm et Tg représentent respectivement une température de pic de fusion (kelvin) et une température de transition vitreuse intermédiaire (kelvin) mesurées conformément à JIS K7121 : 2012,
sont satisfaites.

**2.** Produit d'acétalisation d'un copolymère d'éthylène/alcool vinylique, comprenant :

20 à 80 % en mol d'une unité d'éthylène ; et
4 à 76 % en mol d'une unité d'alcool vinylique
basés sur une unité monomère totale constituant le produit d'acétalisation, dans lequel
un degré d'acétalisation est de 5 à 80 % en mol,
l'expression (1) :

$$0{,}75 \leq W_{0.05h}/2f \leq 1{,}00 \qquad (1)$$

dans laquelle $W_{0.05h}/2f$ représente un facteur de symétrie déterminé par analyse de chromatographie liquide haute performance par gradient de partage en phase inverse avec un éluent d'eau-éthanol, conformément à JIS K 0124 : 2011,
est satisfaite, et
un rapport méso/racémo dans une structure cyclique d'acétal est inférieur à 5.

**3.** Produit d'acétalisation selon la revendication 1, dans lequel un rapport méso/racémo dans une structure cyclique d'acétal est inférieur à 5.

**4.** Produit d'acétalisation selon l'une quelconque des revendications 1 à 3, dans lequel une valeur SP est de 12,6 $(cal/cm^3)^{1/2}$ ou moins.

**5.** Produit d'acétalisation selon l'une quelconque des revendications 1 à 4, dans lequel un degré d'acétalisation est de 5 à 62 % en mol.

**6.** Composition comprenant

le produit d'acétalisation (A) selon l'une quelconque des revendications 1 à 5, et au moins un composant sélectionné parmi le groupe constitué d'une résine (B) autre que le produit d'acétalisation (A), d'un plastifiant, d'un antioxydant et d'un absorbeur d'ultraviolet, dans laquelle
une teneur en le produit d'acétalisation (A) est de 70 % en masse ou plus.

**7.** Composition selon la revendication 6, dans laquelle une température de pic de fusion Tms mesurée conformément à JISK7121 : 2012 est de 120 °C à 180 °C.

**8.** Composition selon la revendication 6 ou 7, dans laquelle une teneur en le plastifiant est de 40 parties en masse ou moins basée sur 100 parties en masse du produit d'acétalisation (A).

**9.** Composition selon l'une quelconque des revendications 6 à 8, dans laquelle une teneur en le plastifiant est de 10 à 40 parties en masse basée sur 100 parties en masse du produit d'acétalisation (A).

**10.** Composition selon l'une quelconque des revendications 6 à 9, dans laquelle une valeur SP du plastifiant est de 9,2 à 12,0 $(cal/cm^3)^{1/2}$.

**11.** Composition selon les revendications 6 à 10, dans laquelle la résine (B) est un copolymère d'éthylène/alcool vinylique, et/ou un produit d'acétalisation (B) d'un copolymère d'éthylène/alcool vinylique, satisfaisant l'expression (3) suivante :

$$Tm/Tg < 1,27 \qquad (3)$$

dans laquelle Tm et Tg représentent respectivement une température de pic de fusion (kelvin) et une température de transition vitreuse intermédiaire (kelvin) mesurées conformément à JIS K7121 : 2012.

**12.** Composition selon les revendications 6 à 11, dans laquelle l'expression (4) suivante :

$$\Delta H_{AH}/\Delta H_A \leq 0,30 \qquad (4)$$

dans laquelle $\Delta H_A$ représente une quantité de chaleur de fusion cristalline, mesurée avec un calorimètre différentiel (DSC), par augmentation de température de 25 °C à 140°C à un taux d'augmentation de température de 10 °C/min, rétention à 140 °C pendant 30 minutes, puis chute de température de 140 °C à -30 °C à un taux de chute de température de 4 °C/min, et de nouveau augmentation de température de -30 °C à 200 °C à un taux d'augmentation de température de 10 °C/min, et $\Delta H_{AH}$ représente une quantité de chaleur de fusion cristalline à une température supérieure en division de pic à 145 °C du $\Delta H_A$ ;
est satisfaite.

**13.** Procédé de production du produit d'acétalisation selon l'une quelconque des revendications 1 à 5, le procédé comprenant :

(i) une étape de préparation d'une dispersion comprenant un copolymère d'éthylène/alcool vinylique, un aldéhyde et un solvant, et d'imprégnation du copolymère d'éthylène/alcool vinylique d'au moins une portion de l'aldéhyde ; et
(ii) une étape d'ajout d'un catalyseur à la dispersion et d'acétalisation du copolymère d'éthylène/alcool vinylique, après l'étape (i), dans lequel le copolymère d'éthylène/alcool vinylique est un objet poreux, et l'acétalisation est réalisée par réaction solide-liquide.

**14.** Feuille de résine comprenant une ou plusieurs couches contenant le produit d'acétalisation selon l'une quelconque des revendications 1 à 5 ou la composition selon l'une quelconque des revendications 6 à 12.

**15.** Couche intermédiaire de verre feuilleté, comprenant la feuille de résine selon la revendication 14.

**16.** Verre feuilleté comprenant :

deux plaques de verre ; et
la couche intermédiaire de verre feuilleté selon la revendication 15, disposée entre les deux plaques de verre.

Fig.1

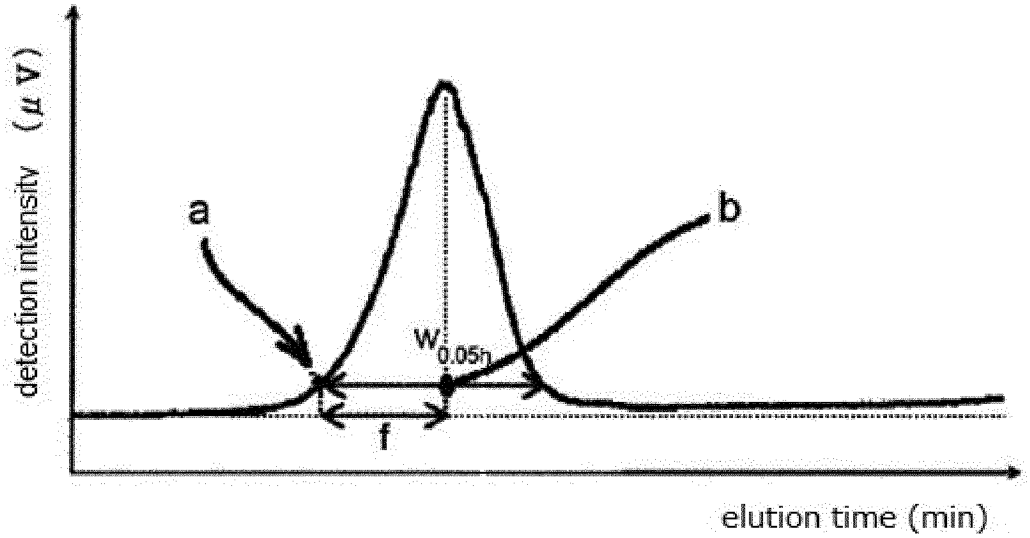
detection intensity (μV)
a
b
$W_{0.05h}$
f
elution time (min)

Fig.2

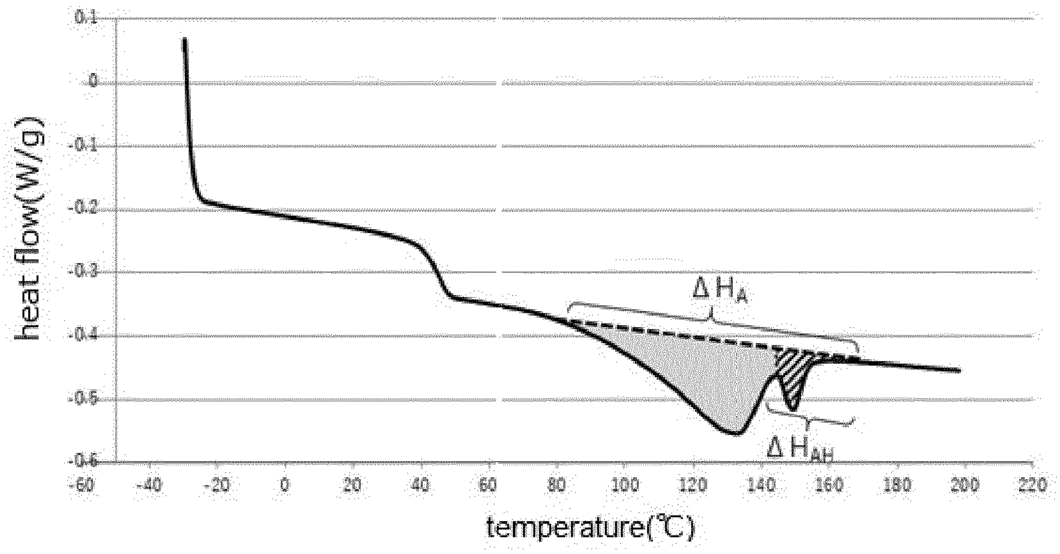
heat flow(W/g)
0.1
0
-0.1
-0.2
-0.3
-0.4
-0.5
-0.6
-60
-40
-20
0
20
40
60
80
100
120
140
160
180
200
220
ΔH_A
ΔH_AH
temperature(℃)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63079741 A
- JP 2004068013 A
- JP 2011057737 A
- WO 2020196186 A1
- JP H11293077 A
- JP 2002121290 A
- WO 03033583 A
- EP 1235683 A
- WO 1999058334 A


### Non-patent literature cited in the description


- **R.F.FEDORS**. *Polym. Eng. Sci.*, 1947, vol. 14, 147